# FASCICULE DE BREVET EUROPEEN

(11) **EP 4 222 003 B1**
(45) Date de publication et mention de la délivrance du brevet: **06.11.2024**
(21) Numéro de dépôt: 21798067.1
(22) Date de dépôt: 24.09.2021
(51) Int. Cl.: B60C 19/12, B29C 73/16

(54) **PNEUMATIQUE COMPRENANT UNE COUCHE DE PRODUIT AUTO-OBTURANT OPTIMISÉE**
REIFEN MIT EINER OPTIMIERTEN SCHICHT AUS SELBSTDICHTENDEM PRODUKT
TYRE COMPRISING AN OPTIMIZED LAYER OF SELF-SEALING PRODUCT

(30) Priorité: 29.09.2020 FR 2009908
(43) Date de publication de la demande: 09.08.2023
(73) Titulaire: COMPAGNIE GENERALE DES ETABLISSEMENTS MICHELIN, 63040 Clermont-Ferrand (FR)
(72) Inventeur: SARAZIN, Fréderic, 63040 CLERMONT-FERRAND CEDEX 9 (FR)
(74) Mandataire: M.F.P. Michelin
(86) Numéro de dépôt international: PCT/FR2021/051647
(87) Numéro de publication internationale: WO 2022/069820

(56) Documents cités:
- EP-A2- 2 629 964
- JP-A- 2016 221 991
- US-A- 5 085 942
- US-A1- 2016 167 455

## Description

La présente invention concerne un pneumatique. Par pneumatique, on entend un bandage destiné à former une cavité en coopérant avec un élément support, par exemple une jante, cette cavité étant apte à être pressurisée à une pression supérieure à la pression atmosphérique. Un pneumatique selon l'invention présente une structure de forme sensiblement toroïdale de révolution autour d'un axe principal du pneumatique.

On connait de EP2629964 un pneumatique comprenant une bande de roulement destinée à entrer en contact avec le sol lors d'un roulage du pneumatique par l'intermédiaire d'une surface de roulement. La bande de roulement comprend des découpures circonférentielles principales ainsi que des nervures centrales agencées axialement respectivement entre deux découpures circonférentielles principales adjacentes et délimitée axialement par lesdites deux découpures circonférentielles principales adjacentes.

Le pneumatique de EP2629964 comprend une couche interne d'étanchéité destinée à former une cavité étanche au gaz de gonflage lorsque le pneumatique est monté sur un support de montage, par exemple une jante ainsi qu'une couche d'un produit auto-obturant s'étendant circonférentiellement radialement à l'intérieur d'une partie de la couche interne d'étanchéité.

La couche de produit auto-obturant permet, en cas de perforation du pneumatique due à un objet perforant, d'obturer l'orifice créé par l'objet perforant sous l'effet de la pression interne du pneumatique. En effet, sous l'effet de la pression interne du pneumatique, le produit auto-obturant est amené à fluer dans l'orifice d'écoulement de l'air vers l'extérieur, en vue de l'obturer et de rétablir l'étanchéité au gaz de gonflage. De nombreux produits auto-obturant ont été décrits dans l'état de la technique, notamment dans US4426468, EP1090069, WO99/62998, US4113799, US4115172, US4913209, US5085942, US5295525, FR2955587 et EP2167329.

La présence de la couche de produit auto-obturant, si elle s'avère efficace pour lutter contre les perforations, entraine nécessairement un alourdissement du pneumatique par rapport à un pneumatique dépourvu de couche de produit auto-obturant.

L'invention a pour but de fournir un pneumatique pourvu d'une couche de produit obturant le plus léger possible et dont la couche de produit auto-obturant est sensiblement aussi efficace contre les perforations que les couches de produit auto-obturant des pneumatiques de l'état de la technique.

A cet effet, l'invention a pour objet un pneumatique comprenant :
- une bande de roulement comprenant :
- au moins une nervure, dite profondément découpée, comprenant au moins une découpure transversale présentant une profondeur Ht telle que Ht/Hs ≥ 50%, avec Hs étant la hauteur de sculpture,
- au moins une nervure, dite non ou faiblement découpée, dépourvue de découpures transversales ou comprenant des découpures transversales satisfaisant chacune, pour au moins 50% du nombre de découpures transversales de la ou chaque nervure non ou faiblement découpée, au moins une des conditions suivantes :
   - la découpure transversale de la nervure non ou faiblement découpée présente une largeur strictement inférieure à 1,6 mm,
   - la découpure transversale de la nervure non ou faiblement découpée présente une profondeur H telle que H/Hs < 50%,
- une couche interne d'étanchéité,
- une couche d'un produit auto-obturant s'étendant circonférentiellement radialement à l'intérieur d'une partie de la couche interne d'étanchéité,
la couche de produit auto-obturant comprenant, sur au moins 50% de la longueur circonférentielle de la couche de produit auto-obturant:
- une portion axiale s'étendant axialement au droit de la nervure profondément découpée et présentant une épaisseur moyenne Ec > 0 de produit auto-obturant,
- une portion axiale s'étendant axialement au droit de la nervure non ou faiblement découpée et présentant une épaisseur moyenne Eb ≥ 0 de produit auto-obturant telle que Eb < Ec.

Les inventeurs à l'origine de l'invention ont déterminé que les portions axiales de la bande de roulement risquant le plus de subir une perforation étaient les nervures dans lesquelles étaient ménagées les découpures transversales les plus profondes. Conformément à l'invention, ces portions axiales comprennent les découpures transversales présentant une profondeur au moins égale à la moitié de la hauteur de sculpture. Ainsi, l'invention prévoit une épaisseur moyenne Ec relativement élevée de produit auto-obturant au droit de ces nervures profondément découpées ce qui permet de garantir une efficacité élevée de la couche de produit auto-obturant contre les perforations ayant lieu dans ces nervures profondément découpées.

Afin d'alléger le pneumatique, les inventeurs ont déterminé que les nervures peu ou faiblement découpées présentent statistiquement moins risques de subir des perforations. En effet, dans le cas d'une nervure non découpée, une épaisseur relativement grande de la bande de roulement oppose une résistance à la perforation supérieure par rapport à une épaisseur relativement petite. Dans le cas d'une nervure faiblement découpée comprenant des découpures transversales peu profondes, d'une part, l'épaisseur de la bande de roulement protège le pneumatique d'une perforation dans le cas où l'objet perforant est relativement court et, d'autre part, une épaisseur relativement grande de la bande de roulement oppose une résistance à la perforation supérieure par rapport à une épaisseur relativement petite. De plus, dans le cas d'une nervure faiblement découpée comprenant des découpures transversales peu larges, la probabilité qu'un objet perforant vienne s'y loger est relativement faible. Ainsi, l'invention prévoit une épaisseur moyenne Eb relativement petite, voire nulle, de produit auto-obturant au droit des nervures non ou faiblement découpées ce qui permet d'alléger significativement le pneumatique.

La couche de produit auto-obturant permet, en cas de perforation du pneumatique due à un objet perforant, d'obturer l'orifice créé par l'objet perforant sous l'effet de la pression interne du pneumatique. En effet, sous l'effet de la pression interne du pneumatique, le produit auto-obturant est amené à fluer dans l'orifice d'écoulement de l'air vers l'extérieur, en vue de l'obturer et de rétablir l'étanchéité au gaz de gonflage.

Avantageusement, dans certains modes de réalisation, la couche de produite auto-obturant est constituée d'un unique produit auto-obturant. Dans ces modes de réalisation, le produit auto-obturant est agencé au contact du gaz de gonflage présent dans la cavité délimitée au moins en partie par le produit auto-obturant et un support de montage du pneumatique, par exemple une jante, lorsque le pneumatique est monté sur le support de montage.

Conformément à l'invention, on pourra avoir dans certains modes de réalisation, une ou plusieurs nervure(s) profondément découpée(s) et une ou plusieurs portion(s) axiale(s) d'épaisseur non nulle relativement importante s'étendant axialement chacune au droit de la ou d'une des nervures profondément découpées ainsi qu'une ou plusieurs nervure(s) non ou faiblement découpée(s) et plusieurs portion(s) axiale(s) d'épaisseur non nulle relativement réduite s'étendant axialement chacune au droit de la ou d'une des nervures non ou faiblement découpées.

Dans d'autres modes de réalisation, on pourra avoir une ou plusieurs nervure(s) profondément découpée(s) et une ou plusieurs portion(s) axiale(s) d'épaisseur non nulle relativement importante s'étendant axialement chacune au droit de la ou d'une des nervures profondément découpées et ainsi qu'une ou plusieurs nervure(s) non ou faiblement découpée(s) et une ou plusieurs portion(s) axiale(s) d'épaisseur nulle s'étendant axialement chacune au droit de la ou d'une des nervures non ou faiblement découpées.

Dans d'autres modes de réalisation, on pourra avoir une ou plusieurs nervure(s) profondément découpée(s) et une ou plusieurs portion(s) axiale(s) d'épaisseur non nulle relativement importante s'étendant axialement chacune au droit de la ou d'une des nervures profondément découpées, une ou plusieurs nervures non ou faiblement découpées et une plusieurs portion(s) axiale(s) d'épaisseur non nulle relativement réduite s'étendant axialement chacune au droit de la ou d'une des nervures non ou faiblement découpées et une ou plusieurs portion(s) axiale(s) d'épaisseur nulle s'étendant axialement chacune au droit de la ou d'une des nervures non ou faiblement découpées.

La portion axiale de la couche de produit auto-obturant agencée au droit d'une nervure profondément découpée ou d'une nervure non ou faiblement découpée de la bande de roulement est la portion axiale de produit auto-obturant délimitée par extrémités axiales définies par deux plans circonférentiels perpendiculaires à l'axe de rotation du pneumatique et passant respectivement par les extrémités axiales de la nervure correspondante. Ainsi, dans le cas où une portion axiale dite épaisse de la couche de produit auto-obturant présente une largeur axiale supérieure à la largeur axiale de la nervure profondément découpée, seulement une partie de la portion axiale épaisse de la couche de produit auto-obturant est située au droit de la nervure profondément découpée. Dans le cas où une portion axiale épaisse de la couche de produit auto-obturant présente une largeur axiale inférieure à la largeur axiale de la nervure profondément découpée, l'intégralité de la portion axiale épaisse de la couche de produit auto-obturant est située au droit de la nervure profondément découpée. De façon analogue, dans le cas où une portion axiale dite mince de la couche de produit auto-obturant présente une largeur axiale supérieure à la largeur axiale de la nervure non ou faiblement découpée, seulement une partie de la portion axiale mince de la couche de produit auto-obturant est située au droit de la nervure non ou faiblement découpée. Dans le cas où une portion axiale mince de la couche de produit auto-obturant présente une largeur axiale inférieure à la largeur axiale de la nervure non ou faiblement découpée, l'intégralité de la portion axiale mince de la couche de produit auto-obturant est située au droit de la nervure non ou faiblement découpée.

L'invention est avantageuse, sans que cela ne constitue une caractéristique essentielle, dans les modes de réalisation dans lesquels la ou chaque découpure transversale de la ou chaque nervure profondément découpée est particulièrement profonde, c'est-à-dire pour laquelle Ht/Hs ≥ 75% et plus préférentiellement Ht/Hs ≥ 90%.

En outre, L'invention est avantageuse, sans que cela ne constitue une caractéristique essentielle, dans les modes de réalisation dans lesquels la ou chaque découpure transversale de la ou chaque nervure faiblement découpée est particulièrement peu large, c'est-à-dire pour laquelle sa largeur est strictement inférieure à 1,6 mm et plus préférentiellement strictement inférieure à 1,0 mm.

L'invention est également avantageuse sans que cela ne constitue une caractéristique essentielle, dans les modes de réalisation dans lesquels la ou chaque découpure transversale de la ou chaque nervure faiblement découpée est particulièrement peu profonde, c'est-à-dire pour laquelle H/Hs ≤ 30%.

Les caractéristiques avantageuses des découpures transversales décrites ci-dessus concernant les découpures transversales de la ou chaque nervure faiblement découpée sont satisfaites pour au moins 50%, de préférence pour au moins 75% et plus préférentiellement pour 100% du nombre de découpures transversales de la ou chaque nervure faiblement découpée.

Le fait que la couche de produit auto-obturant présente les caractéristiques essentielles de l'invention sur au moins 50% de la longueur circonférentielle de la couche de produit auto-obturant permet d'envisager des modes de réalisation dans lesquels le pneumatique est dépourvu de couche de produit auto-obturant sur au plus 50% de la longueur circonférentielle de la couche de produit auto-obturant ou encore des modes de réalisation dans lesquels la couche de produit auto-obturant s'étend sur 100% de la longueur circonférentielle de la couche de produit auto-obturant sans pour autant présenter les caractéristiques essentielles sur 100% de la longueur circonférentielle. Bien évidemment, afin de maximiser les effets de l'invention, la couche de produit auto-obturant présente les caractéristiques essentielles de l'invention sur au moins 75%, plus préférentiellement sur au moins 95% et idéalement sur 100% de la longueur circonférentielle de la couche de produit auto-obturant.

L'invention permet d'envisager des modes de réalisation dans laquelle la couche de produit auto-obturant s'étend circonférentiellement de façon discontinue ou continue sur tout ou partie de la longueur circonférentielle de la couche de produit auto-obturant. De façon préférée et afin de garantir une efficacité élevée de la couche de produit auto-obturant contre les perforations, chaque portion axiale de la couche de produit auto-obturant s'étendant au droit de la ou chaque nervure profondément découpée et non ou faiblement découpée s'étend circonférentiellement continûment sur au moins 50%, de préférence sur au moins 75%, plus préférentiellement sur au moins 95% et idéalement sur 100% de la longueur circonférentielle de la couche de produit auto-obturant.

L'invention permet également d'envisager des portions axiales de la couche de produit auto-obturant qui présente des épaisseurs variables selon la direction circonférentielle. Néanmoins, afin de maximiser le gain en masse et de garantir une efficacité uniforme de la couche de produit auto-obturant au droit de chaque nervure profondément découpée et non ou faiblement découpée, l'épaisseur moyenne de chaque portion axiale de la couche de produit auto-obturant s'étendant au droit de la ou chaque nervure profondément découpée et non ou faiblement découpée est circonférentiellement sensiblement constante sur au moins 50%, de préférence sur au moins 75% et plus préférentiellement sur au moins 95% et idéalement sur 100% de la longueur circonférentielle de la couche de produit auto-obturant.

Chaque épaisseur moyenne Eb, Ec de la portion axiale de la couche de produit auto-obturant s'étendant axialement au droit de chaque nervure profondément découpée et non ou faiblement découpée est mesurée en faisant, dans plusieurs plans de coupe méridiens, une moyenne des épaisseurs de la couche de produit auto-obturant entre les extrémités axiales de ladite portion axiale de la couche de produit auto-obturant, les épaisseurs étant mesurées par exemple tous les millimètres. Dans le cas préféré où l'épaisseur moyenne est sensiblement constante circonférentiellement, on prendra un nombre réduit de plans de coupe méridiens. Dans le cas où l'épaisseur moyenne est non constante circonférentiellement, on prendra un nombre significatif de plans de coupe méridiens, par exemple seize, et on fera la moyenne des épaisseurs mesurée dans tous les plans de coupe méridiens. L'épaisseur mesurée en un point est évidemment la distance droite la plus courte séparant la surface radialement extérieure et la surface radialement intérieure de la couche de produit auto-obturant passant par ce point. On notera que les coupes dans les plans de coupe méridien sont réalisées sans détériorer la couche de produit auto-obturant afin de mesurer précisément les différentes grandeurs géométriques, notamment les épaisseurs. On utilisera notamment des procédés de découpure par jet d'eau à très haute pression.

La profondeur d'une découpure est, sur un pneumatique neuf, la distance radiale maximale entre le fond de la découpure et son projeté sur le sol lors du roulage du pneumatique. La valeur maximale des profondeurs des découpures est nommée hauteur de sculpture.

Une découpure désigne soit une rainure, soit une incision et forme un espace débouchant sur la surface de roulement.

Une incision ou une rainure présente, sur la surface de roulement, deux dimensions principales caractéristiques : une largeur et une longueur curviligne telles que la longueur curviligne est au moins égale à deux fois la largeur. Une incision ou une rainure est donc délimitée par au moins deux faces latérales principales déterminant sa longueur curviligne et reliées par une face de fond, les deux faces latérales principales étant distantes l'une de l'autre d'une distance non nulle, dite largeur de la découpure.

La largeur d'une découpure est, sur un pneumatique neuf, la distance maximale entre les deux faces latérales principales mesurée, dans le cas où la découpure ne comprend pas de chanfrein, à une cote radiale confondue avec la surface de roulement, et dans le cas où la découpure comprend un chanfrein, à la cote radiale la plus radialement extérieure de la découpure et radialement intérieure au chanfrein. La largeur est mesurée sensiblement perpendiculairement aux faces latérales principales.

La largeur axiale d'une découpure est, quant à elle, mesurée selon la direction axiale du pneumatique, par exemple dans un plan de coupe méridien du pneumatique.

Une incision est telle que la distance entre les faces latérales principales est appropriée pour permettre la mise en contact au moins partielle des faces latérales principales délimitant ladite incision lors du passage dans l'aire de contact, notamment lorsque le pneumatique est à l'état neuf et dans des conditions usuelles de roulage, comprenant notamment le fait que le pneumatique soit à charge nominale et à pression nominale.

Une rainure est telle que la distance entre les faces latérales principales est telle que ces faces latérales principales ne peuvent venir en contact l'une contre l'autre dans des conditions usuelles de roulage, comprenant notamment le fait que le pneumatique soit à charge nominale et à pression nominale.

Une découpure peut être transversale ou circonférentielle.

Une découpure transversale est telle que la découpure s'étend selon une direction moyenne formant un angle strictement supérieur à 30°, de préférence supérieur ou égal à 45° avec la direction circonférentielle du pneumatique. La direction moyenne est la courbe la plus courte joignant les deux extrémités de la découpure et parallèle à la surface de roulement. Une découpure transversale peut être continue, c'est-à-dire ne pas être interrompue par un bloc de sculpture ou une autre découpure de sorte que les deux faces latérales principales déterminant sa longueur sont ininterrompues sur la longueur de la découpure transversale. Une découpure transversale peut également être discontinue, c'est-à-dire interrompue par un ou plusieurs blocs de sculpture et/ou une ou plusieurs découpures de sorte que les deux faces latérales principales déterminant sa longueur sont interrompues par un ou plusieurs blocs de sculpture et/ou une ou plusieurs découpures.

Une découpure circonférentielle est telle que la découpure s'étend selon une direction moyenne formant un angle inférieur ou égal à 30°, de préférence inférieur ou égal à 10° avec la direction circonférentielle du pneumatique. La direction moyenne est la courbe la plus courte joignant les deux extrémités de la découpure et parallèle à la surface de roulement. Dans le cas d'une découpure circonférentielle continue, les deux extrémités sont confondues l'une avec l'autre et sont jointes par une courbe faisant un tour complet du pneumatique. Une découpure circonférentielle peut être continue, c'est-à-dire ne pas être interrompue par un bloc de sculpture ou une autre découpure de sorte que les deux faces latérales principales déterminant sa longueur sont ininterrompues sur l'ensemble d'un tour du pneumatique. Une découpure circonférentielle peut également être discontinue, c'est-à-dire interrompue par un ou plusieurs blocs de sculpture et/ou une ou plusieurs découpures de sorte que les deux faces latérales principales déterminant sa longueur sont interrompues par un ou plusieurs blocs de sculpture et/ou une ou plusieurs découpures sur l'ensemble d'un tour du pneumatique.

Dans le cas d'une découpure circonférentielle située hors du plan médian du pneumatique, les faces latérales sont appelées faces axialement intérieure et face axialement extérieure, la face axialement intérieure étant agencée, à un azimut donné, axialement à l'intérieur de la face axialement extérieure par rapport au plan médian.

Chaque découpure circonférentielle comprend des extrémités axiales axialement intérieure et extérieure. Que ce soit dans le cas d'une découpure circonférentielle dépourvue de chanfrein ou pourvue de chanfrein, chaque extrémité axiale axialement intérieure et extérieure est confondue avec chaque bord axial de la découpure circonférentielle situé sur la surface de roulement et donc au contact d'un sol de roulement.

Dans le cas d'une découpure transversale, les faces latérales sont appelées face d'attaque et face de fuite, la face d'attaque étant celle dont le bord, pour une ligne circonférentielle donnée, entre dans l'aire de contact avant le bord de la face de fuite.

Dans des modes de réalisation, la ou chaque découpure circonférentielle, qu'elle soit principale ou non, est munie de chanfreins. Un chanfrein d'une découpure circonférentielle peut être un chanfrein droit ou un chanfrein arrondi. Un chanfrein droit est formé par une face plane inclinée par rapport à la face axialement intérieure et extérieure qu'elle prolonge jusqu'au bord axialement intérieur ou extérieur délimitant axialement la découpure circonférentielle. Un chanfrein arrondi est formé par une face courbe se raccordant tangentiellement à la face axialement intérieure ou extérieure qu'elle prolonge. Un chanfrein d'une découpure circonférentielle est caractérisé par une hauteur et une largeur égale respectivement à la distance radiale et à la distance axiale entre le point commun entre la face axialement intérieure ou extérieure prolongée par le chanfrein et le bord axialement intérieur ou extérieur délimitant axialement la découpure circonférentielle.

Dans des modes de réalisation, la ou chaque découpure transversale est munie de chanfreins. En d'autres termes, chaque découpure transversale étant délimitée radialement par des faces d'attaque et de fuite délimitant circonférentiellement ladite découpure transversale et reliées entre elles par une face de fond délimitant radialement vers l'intérieur ladite découpure transversale. Un chanfrein d'une découpure transversale peut être un chanfrein droit ou un chanfrein arrondi. Un chanfrein droit est formé par une face plane inclinée par rapport à la face d'attaque ou de fuite qu'elle prolonge jusqu'au bord d'attaque ou de fuite délimitant circonférentiellement la découpure transversale. Un chanfrein arrondi est formé par une face courbe se raccordant tangentiellement à la face d'attaque ou de fuite qu'elle prolonge. Un chanfrein d'une découpure transversale est caractérisé par une hauteur et une largeur égale respectivement à la distance radiale et à la distance selon une direction perpendiculaire aux faces d'attaque ou de fuite entre le point commun entre la face d'attaque ou de fuite prolongée par le chanfrein et le bord d'attaque ou de fuite délimitant circonférentiellement la découpure transversale.

De façon classique, on détermine les extrémités axiales de la bande de roulement comme les extrémités axiales du pneumatique de la surface de roulement au contact d'un sol de roulage sur un pneumatique non chargé monté sur une jante nominale et gonflé à la pression nominale au sens de la norme de la European Tyre and Rim Technical Organisation ou « ETRTO », 2019. Dans le cas d'une frontière évidente entre la surface de roulement et le reste du pneumatique, les extrémités axiales de la bande de roulement sont simplement déterminées. Dans le cas où la surface de roulement est continue avec les surfaces externes des flancs du pneumatique, chaque extrémité axiale de la bande de roulement passe par le point pour lequel l'angle entre la tangente à la surface de roulement et une droite parallèle à la direction axiale passant par ce point est égal à 30°. Lorsqu'il existe sur un plan de coupe méridienne, plusieurs points pour lesquels ledit angle est égal en valeur absolue à 30°, on retient le point radialement le plus à l'extérieur.

Le pneumatique selon l'invention présente une forme sensiblement torique autour d'un axe de révolution sensiblement confondu avec l'axe de rotation du pneumatique. Cet axe de révolution définit trois directions classiquement utilisées par l'homme du métier : une direction axiale, une direction circonférentielle et une direction radiale.

Par direction axiale, on entend la direction sensiblement parallèle à l'axe de révolution du pneumatique, c'est-à-dire l'axe de rotation du pneumatique.

Par direction circonférentielle, on entend la direction qui est sensiblement perpendiculaire à la fois à la direction axiale et à un rayon du pneumatique (en d'autres termes, tangente à un cercle dont le centre est sur l'axe de rotation du pneumatique).

Par direction radiale, on entend la direction selon un rayon du pneumatique, c'est-à-dire une direction quelconque coupant l'axe de rotation du pneumatique et sensiblement perpendiculaire à cet axe.

Par plan médian du pneumatique (noté M), on entend le plan perpendiculaire à l'axe de rotation du pneumatique qui est situé à mi-distance axiale des deux bourrelets et passe par le milieu axial de l'armature de sommet.

Par plan circonférentiel équatorial du pneumatique (noté E), on entend, dans un plan de coupe méridien, le plan passant par l'équateur du pneumatique, perpendiculaire au plan médian et à la direction radiale. L'équateur du pneumatique est, dans un plan de coupe méridien (plan perpendiculaire à la direction circonférentielle et parallèle aux directions radiale et axiales) l'axe parallèle à l'axe de rotation du pneumatique et située à équidistance entre le point radialement le plus extérieur de la bande de roulement destiné à être au contact avec le sol et le point radialement le plus intérieur du pneumatique destiné à être en contact avec un support, par exemple une jante, la distance entre ces deux points étant égale à H.

Par plan méridien, on entend un plan parallèle à et contenant l'axe de rotation du pneumatique et perpendiculaire à la direction circonférentielle.

Par radialement intérieur, respectivement radialement extérieur, on entend plus proche de l'axe de rotation du pneumatique, respectivement plus éloigné de l'axe de rotation du pneumatique. Par axialement intérieur, respectivement axialement extérieur, on entend plus proche du plan médian du pneumatique, respectivement plus éloigné du plan médian du pneumatique.

Par bourrelet, on entend la portion du pneumatique destiné à permettre l'accrochage du pneumatique sur un support de montage, par exemple une roue comprenant une jante. Ainsi, chaque bourrelet est notamment destiné à être au contact d'un crochet de la jante permettant son accrochage.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Les pneumatiques sont, dans des modes de réalisation préférés de l'invention, destinés à des véhicule de tourisme tels que définis au sens de la norme de la European Tyre and Rim Technical Organisation ou « ETRTO », 2019. Un tel pneumatique présente une section dans un plan de coupe méridien caractérisée par une hauteur de section H et une largeur de section nominale ou grosseur boudin S au sens de la norme de la European Tyre and Rim Technical Organisation ou « ETRTO », 2019 telles que le rapport H/S, exprimé en pourcentage, est au plus égal à 90, de préférence au plus égal à 80 et plus préférentiellement au plus égal à 70 et est au moins égal à 30, de préférence au moins égal à 40, et la largeur de section nominale S est au moins égale à 115 mm, de préférence au moins égale à 155 mm et plus préférentiellement au moins égale à 175 mm et au plus égal à 385 mm, de préférence au plus égal à 315 mm, plus préférentiellement au plus égal à 285 mm et encore plus préférentiellement au plus égal à 255 mm. En outre le diamètre au crochet D, définissant le diamètre de la jante de montage du pneumatique, est au moins égal à 12 pouces, de préférence au moins égal à 16 pouces et au plus égal à 24 pouces, de préférence au plus égal à 20 pouces.

Avantageusement, chaque nervure profondément découpée et chaque nervure non ou faiblement découpée est axialement délimitée par une extrémité axialement intérieure et par une extrémité axialement extérieure, chaque extrémité axialement intérieure et extérieure étant choisie parmi :
- une extrémité axiale de la bande de roulement, et
- une extrémité axialement intérieure ou extérieure d'une découpure circonférentielle, dite principale, présentant une profondeur Ha telle que Ha/Hs ≥ 50%, de préférence Ha/Hs ≥ 75% et plus préférentiellement Ha/Hs ≥ 90%,
les extrémités axialement intérieure et extérieure de la nervure étant des extrémités adjacentes l'une à l'autre.

Dans le cas d'une nervure délimitée axialement par une extrémité axiale de la bande de roulement et une extrémité axialement intérieure ou extérieure d'une découpure circonférentielle principale, on parlera généralement d'une nervure latérale car située dans une portion latérale de la bande de roulement. Dans le cas d'une nervure délimitée axialement par une extrémité axialement intérieure (ou extérieure) d'une découpure circonférentielle principale et par une extrémité adjacente axialement extérieure (ou intérieure) d'une autre découpure circonférentielle principale, on parlera généralement d'une nervure centrale car située dans une portion centrale de la bande de roulement.

Par extrémités adjacentes, on comprendra qu'aucune extrémité axialement intérieure ou extérieure d'une découpure circonférentielle principale n'est axialement agencée entre les extrémités adjacentes.

La ou chaque découpure circonférentielle est dite principale en raison de sa profondeur Ha relativement importante par rapport à d'autres découpures circonférentielles complémentaires qui pourraient optionnellement être présentes sur la bande de roulement du pneumatique.

Dans des modes de réalisation préférés, Ec ≥ 1,10 x Eb, de préférence Ec ≥ 1,30 x Eb et plus préférentiellement Ec ≥ 1,50 x Eb. Pour une valeur de Ec donnée, plus le rapport Ec/Eb est élevé, plus l'épaisseur moyenne Eb de la portion axiale s'étendant axialement au droit de la nervure non ou faiblement découpée est réduite et plus le gain en masse est important. Pour une valeur de Eb donnée, plus le rapport Ec/Eb est élevé, plus l'épaisseur moyenne Ec de la portion axiale s'étendant axialement au droit de la nervure profondément découpée est importante, ce qui favorise l'efficacité de l'obturation d'un éventuel orifice dans la nervure profondément découpée.

Dans certains modes de réalisation, Ec ≤ 5,00 x Eb, de préférence Ec ≤ 4,00 x Eb et plus préférentiellement Ec ≤ 2,50 x Eb. Pour une valeur de Ec donnée, plus le rapport Ec/Eb est petit, plus l'épaisseur moyenne Eb de la portion axiale s'étendant axialement au droit de la nervure non ou faiblement découpée est importante et plus l'efficacité de l'obturation d'un éventuel orifice dans la nervure non ou faiblement découpée qui, même s'il est relativement réduit, existe quand même, est améliorée. Pour une valeur de Eb donnée, plus le rapport Ec/Eb est petit, plus l'épaisseur moyenne Ec de la portion axiale s'étendant axialement au droit de la nervure profondément découpée est réduite, ce qui permet de réduire la masse de produit auto-obturant.

Dans des modes de réalisation permettant, comme décrit précédemment de maximiser le compromis entre le gain en masse et l'efficacité de l'obturation d'un éventuel orifice dans la nervure profondément découpée, Ec-Eb ≥ 0,5 mm, de préférence Ec-Eb ≥ 1,0 mm.

Dans des pneumatiques pour véhicule de tourisme et pour véhicule utilitaire décrits précédemment, chaque épaisseur moyenne Ec va avantageusement de 2,0 mm à 5,0 mm, de préférence de 2,5 mm à 4,5 mm et l'épaisseur moyenne Eb va avantageusement de 0,5 mm à 4,0 mm, de préférence de 1,0 mm à 3,0 mm.

Avantageusement, la couche de produit auto-obturant présente, à proximité de la nervure profondément découpée, une largeur axiale significative par rapport à la largeur axiale de chaque nervure profondément découpée pour pouvoir obturer efficacement un éventuel orifice. Ainsi, la couche de produit auto-obturant comprend au moins une portion axiale, dite épaisse, la ou chaque portion axiale épaisse étant au moins en partie confondue avec tout ou partie de la ou de chaque portion axiale s'étendant axialement au droit de la ou de chaque nervure profondément découpée, la ou chaque portion axiale épaisse étant axialement délimitée par deux points d'inflexion adjacents de la courbe de surface radialement intérieure de la couche de produit auto-obturant, l'épaisseur de ladite portion axiale épaisse augmentant en se déplaçant axialement vers l'intérieur de ladite portion axiale épaisse depuis chacun desdits points d'inflexion, la largeur axiale Wy de la portion axiale épaisse étant telle que Wy/Lcy ≥ 0,50, de préférence Wy/Lcy > 1,00 avec Lcy étant la largeur axiale de ladite nervure profondément découpée.

Ainsi, comme défini ci-dessus, la portion axiale épaisse peut présenter une largeur axiale inférieure à la largeur axiale de la nervure profondément découpée, mais néanmoins suffisante pour permettre d'obturer efficacement un éventuel orifice. Dans ce cas, la portion axiale épaisse est confondue avec une partie de la portion axiale de la couche de produit auto-obturant s'étendant au droit de la nervure profondément découpée. La portion axiale épaisse peut également présenter, de façon préférée, une largeur axiale supérieure ou égale à la largeur axiale de la nervure profondément découpée. Dans ce cas, une partie de la portion axiale épaisse est confondue avec la portion axiale de la couche de produit auto-obturant s'étendant au droit de la nervure profondément découpée.

Par point d'inflexion, on désigne un point où, dans un plan de coupe méridien, le sens de la courbure de la courbe de surface radialement intérieure de la couche de produit auto-obturant change. On désigne égale un point d'arrêt de la courbe de surface radialement intérieure de la couche de produit auto-obturant au contact de la couche d'étanchéité. La largeur axiale de la ou de chaque portion axiale épaisse est la distance selon la direction axiale, par exemple mesurée dans un plan de coupe méridien, entre les deux points d'inflexion.

Dans des modes de réalisation dans lesquels les découpures transversales de la ou chaque nervure profondément découpée sont relativement larges, notamment dans le cas de pneumatiques pour véhicule de tourisme et pour véhicule utilitaire, et présentent un risque élevé de subir une perforation et donc dans lesquels l'invention est particulièrement avantageuse, la ou chaque découpure transversale de la ou chaque nervure profondément découpée présente une largeur supérieure ou égale à 0,7 mm, de préférence supérieure ou égale à 1,0 mm et plus préférentiellement supérieure ou égale à 1,6 mm.

Dans des modes de réalisation dans lesquels les découpures transversales de la ou chaque nervure profondément découpée sont relativement profondes, notamment dans le cas de pneumatiques pour véhicule de tourisme et pour véhicule utilitaire, et présentent un risque élevé de subir une perforation et donc dans lesquels l'invention est particulièrement avantageuse, la ou chaque découpure transversale de la ou chaque nervure profondément découpée présente une profondeur allant de 2,0 mm à la hauteur de sculpture, de préférence allant de 4,0 mm à la hauteur de sculpture et plus préférentiellement allant de 5,0 mm à la hauteur de sculpture.

Afin de maximiser l'efficacité de la couche de produit auto-obturant sur la très grande majorité de la largeur axiale de la bande de roulement, chaque extrémité axiale de la couche de produit auto-obturant est agencée à une distance axiale inférieure ou égale à 20%, de préférence inférieure ou égale à 10% de la largeur axiale de la bande de roulement par rapport à respectivement chaque extrémité axiale de la bande de roulement, de préférence axialement à l'intérieur de chaque extrémité axiale de la bande de roulement.

Dans un mode de réalisation, la bande de roulement comprend :
- une portion axialement centrale comprenant :
   - deux découpures circonférentielles principales les plus axialement extérieures agencées axialement de part et d'autre du plan médian du pneumatique et présentant respectivement une profondeur Ha1, Hc2 telle que Ha1/Hs ≥ 50% et Ha2/Hs ≥ 50%, de préférence Ha1/Hs ≥ 75% et Ha2/Hs ≥ 75% et plus préférentiellement Ha1/Hs ≥ 90% et Ha2/Hs ≥ 90%,
   - la ou chaque nervure non ou faiblement découpée,
- des première et deuxième portions axialement latérales agencées axialement à l'extérieur de la portion axialement centrale de part et d'autre axialement de la portion axialement centrale par rapport au plan médian du pneumatique, chaque première et deuxième portion axialement latérale s'étendant axialement depuis chaque extrémité axiale de la bande de roulement jusqu'à chaque extrémité axialement extérieure de chaque découpure circonférentielle principale axialement la plus axialement extérieure, au moins une des première et deuxième portions axialement latérales comprenant une nervure profondément découpée.

Avantageusement, chaque première et deuxième portion axialement latérale comprend respectivement une première et une deuxième nervure profondément découpée.

Dans un mode de réalisation dans lequel la bande de roulement comprend plusieurs nervures profondément découpées, on prévoit que l'épaisseur de la couche de produit auto-obturant varie entre une épaisseur moyenne relativement importante lorsqu'on se situe au droit des nervures profondément découpées et une épaisseur moyenne relativement réduite lorsqu'on se situe au droit de la ou des nervures non ou faiblement découpées. Ainsi, la bande de roulement comprend :
- P > 1 nervures profondément découpées comprenant respectivement au moins une découpure transversale présentant une profondeur Ht telle que Ht/Hs ≥ 50%, de préférence Ht/Hs ≥ 75%, plus préférentiellement Ht/Hs ≥ 90% avec Hs étant la hauteur de sculpture, P étant le nombre total de nervures profondément découpées présentes sur le pneumatique,
- Q ≥ 1 nervure(s) non ou faiblement découpée(s) dépourvue(s) de découpures transversales ou comprenant des découpures transversales satisfaisant chacune, pour au moins 50%, de préférence pour au moins 75% et plus préférentiellement pour 100% du nombre de découpures transversales de la ou chaque nervure faiblement découpée, au moins une des conditions suivantes :
   - la découpure transversale de la nervure non ou faiblement découpée présente une largeur strictement inférieure à 1,6 mm, de préférence strictement inférieure à 1,0 mm et plus préférentiellement strictement inférieure à 0,7 mm,
   - la découpure transversale de la nervure non ou faiblement découpée présente une profondeur H telle que H/Hs < 50%, de préférence H/Hs ≤ 30%,

Q étant le nombre total de nervure(s) non ou faiblement découpée(s) présente(s) sur le pneumatique,
la couche de produit auto-obturant comprenant :
   - P > 1 portions axiales s'étendant chacune axialement au droit d'une des N nervures profondément découpées et présentant chacune une épaisseur moyenne Eck > 0 de produit auto-obturant,
   - Q ≥ 1 portion(s) axiale(s) s'étendant chacune axialement au droit de la ou d'une des Q nervure(s) non ou faiblement découpée(s) et présentant chacune une épaisseur moyenne Ebj ≥ 0 de produit auto-obturant, j allant de 1 à Q, et étant agencée axialement entre deux portions axiales adjacentes de la couche de produit auto-obturant s'étendant axialement au droit de deux des P nervures profondément découpées, et telle que, pour chaque valeur de k allant de 1 à P et au moins 50% des valeurs de j allant de 1 à Q, de préférence au moins 75% des valeurs de j allant de 1 à Q et plus préférentiellement 100% des valeurs de j allant de 1 à Q sont telles que Ebj < Eck.

Dans ce mode de réalisation, dans une variante, Ec1=Ec2=... EcP et Eb1=Eb2=... EbQ et ainsi la relation Ebj < Eck est vérifiée pour chaque valeur de k allant de 1 à P et pour 100% des valeurs de j allant de 1 à Q. Dans d'autres variantes, certaines valeurs de Eck pourront être différentes des autres et ce en fonction du compromis d'efficacité et de gain de masse souhaité pour la couche de produit auto-obturant et la relation Ebj < Eck être vérifiée pour chaque valeur de k et pour au moins 50% des valeurs de j, de préférence pour 100% des valeurs de j dans les cas où l'on souhaite maximiser le gain en masse. De façon analogue et pour la même raison, certaines valeurs de Ebj pourront être différentes des autres.

Dans certains modes de réalisation permettant, comme indiqué plus haut, de favoriser le gain en masse et l'efficacité de l'obturation d'un éventuel orifice dans chaque nervure profondément découpée, pour chaque valeur de k allant de 1 à P, au moins 50% des valeurs de j allant de 1 à Q, de préférence au moins 75% des valeurs de j allant de 1 à Q et plus préférentiellement 100% des valeurs de j allant de 1 à Q sont telles que Eck ≥ 1,10 x Ebj, de préférence Eck ≥ 1,30 x Ebj et plus préférentiellement Eck ≥ 1,50 x Ebj.

Dans d'autres modes de réalisation permettant, comme indiqué plus haut, de favoriser le gain en masse et l'efficacité de l'obturation d'un éventuel orifice dans la ou chaque nervure non ou faiblement découpée, pour chaque valeur de k allant de 1 à P, au moins 50% des valeurs de j allant de 1 à Q, de préférence au moins 75% des valeurs de j allant de 1 à Q et plus préférentiellement 100% des valeurs de j allant de 1 à Q sont telles que Eck ≤ 5,00 x Ebj, de préférence Eck ≤ 4,00 x Ebj et plus préférentiellement Eck ≤ 2,50 x Ebj.

Dans des modes de réalisation permettant, comme décrit précédemment de maximiser le compromis entre le gain en masse et l'efficacité de l'obturation d'un éventuel orifice dans chaque nervure profondément découpée, pour chaque valeur de k allant de 1 à P, au moins 50% des valeurs de j allant de 1 à Q, de préférence au moins 75% des valeurs de j allant de 1 à Q et plus préférentiellement 100% des valeurs de j allant de 1 à Q sont telles que Eck-Ebj ≥ 0,5 mm, de préférence Eck-Ebj ≥ 1,0 mm.

Comme déjà indiqué ci-dessus, dans des pneumatiques pour véhicule de tourisme et pour véhicule utilitaire décrits précédemment, chaque épaisseur moyenne Eck va avantageusement de 2,0 mm à 5,0 mm, de préférence de 2,5 mm à 4,5 mm et chaque épaisseur moyenne Ebj va avantageusement de 0,5 mm à 4,0 mm, de préférence de 1,0 mm à 3,0 mm.

Dans la plupart des pneumatiques pour véhicule de tourisme et pour véhicule utilitaire, P=2 et Q=1, 2 ou 3.

Dans certains modes de réalisation, la bande de roulement comprend N=Q+1 > 1 découpures circonférentielles principales présentant respectivement une profondeur Hai telle que Hai/Hs ≥ 50%, de préférence Hai/Hs ≥ 75% et plus préférentiellement Hai/Hs ≥ 90% pour i allant de 1 à N, N étant le nombre total de découpures circonférentielles principales présentes sur le pneumatique, la ou chaque nervure non ou faiblement découpée étant agencée axialement entre deux découpures circonférentielles principales adjacentes et délimitée axialement par lesdites deux découpures circonférentielles principales adjacentes,
la couche de produit auto-obturant comprenant N > 1 portions axiales s'étendant chacune axialement au droit d'une des N découpures circonférentielles principales et présentant chacune une épaisseur moyenne Eai >0 de produit auto-obturant telle que, pour chaque valeur de i allant de 1 à N, au moins 50% des valeurs de j allant de 1 à Q, de préférence au moins 75% des valeurs de j allant de 1 à Q et plus préférentiellement 100% des valeurs de j allant de 1 à Q sont telles que Ebj < Eai.

Dans ces modes, outre la ou les nervures profondément découpées et la ou les nervures non ou faiblement découpées, le pneumatique comprend d'autres portions axiales, ici les découpures circonférentielles principales, risquant de subir une perforation et ce en raison de leur profondeur relativement importante. Afin de garantir l'efficacité contre la perforation dans ces découpures circonférentielles principales, les modes de réalisation précédents prévoient la présence d'une portion axiale de la couche de produit auto-obturant au droit de ces découpures circonférentielles principales.

Par découpures circonférentielles principales adjacentes, on comprendra qu'aucune découpure circonférentielle principale n'est axialement agencée entre les découpures circonférentielles principales adjacentes. De façon analogue, par portions axiales adjacentes s'étendant axialement au droit de deux des N découpures circonférentielles principales, on comprendra qu'aucune portion axiale s'étendant axialement au droit d'une des N découpures circonférentielles principales n'est axialement agencée entre les portions axiales adjacentes.

De façon analogue à la définition de ce qu'est une portion axiale de la couche de produit auto-obturant au droit d'une nervure, la portion axiale de la couche de produit auto-obturant agencée au droit d'une découpure circonférentielle principale est la portion axiale de produit auto-obturant délimitée par extrémités axiales définies par deux plans circonférentiels perpendiculaires à l'axe de rotation du pneumatique et passant respectivement par les extrémités axiales de la découpure circonférentielle principale. Ainsi, dans le cas où une portion axiale dite épaisse de la couche de produit auto-obturant présente une largeur axiale supérieure à la largeur axiale de la découpure circonférentielle principale, seulement une partie de la portion axiale épaisse de la couche de produit auto-obturant est située au droit de la découpure circonférentielle principale. Dans le cas où une portion axiale épaisse de la couche de produit auto-obturant présente une largeur axiale inférieure à la largeur axiale de la découpure circonférentielle principale, l'intégralité de la portion axiale épaisse de la couche de produit auto-obturant est située au droit de la découpure circonférentielle principale.

Dans ces modes de réalisation, dans une variante, Ea1=Ea2=... EaN et Eb1=Eb2=... EbQ et ainsi la relation Ebj < Eai est vérifiée pour chaque valeur de i allant de 1 à N et pour 100% des valeurs de j allant de 1 à Q. Dans d'autres variantes, certaines valeurs de Eai pourront être différentes des autres et ce en fonction du compromis d'efficacité et de gain de masse souhaité pour la couche de produit auto-obturant et la relation Ebj < Eai être vérifiée pour chaque valeur de i et pour au moins 50% des valeurs de j, de préférence pour 100% des valeurs de j dans les cas où l'on souhaite maximiser le gain en masse. De façon analogue et pour la même raison, certaines valeurs de Ebj pourront être différentes des autres.

Dans certains modes de réalisation permettant, comme indiqué plus haut, de favoriser le gain en masse et l'efficacité de l'obturation d'un éventuel orifice dans la découpure circonférentielle principale, pour chaque valeur de i allant de 1 à N, au moins 50% des valeurs de j allant de 1 à Q, de préférence au moins 75% des valeurs de j allant de 1 à Q et plus préférentiellement 100% des valeurs de j allant de 1 à Q sont telles que Eai ≥ 1,10 x Ebj, de préférence Eai ≥ 1,30 x Ebj et plus préférentiellement Eai ≥ 1,50 x Ebj.

Dans d'autres modes de réalisation permettant, comme indiqué plus haut, de favoriser le gain en masse et l'efficacité de l'obturation d'un éventuel orifice dans la nervure non ou faiblement découpée, pour chaque valeur de i allant de 1 à N, au moins 50% des valeurs de j allant de 1 à Q, de préférence au moins 75% des valeurs de j allant de 1 à Q et plus préférentiellement 100% des valeurs de j allant de 1 à Q sont telles que Eai ≤ 5,00 x Ebj, de préférence Eai ≤ 4,00 x Ebj et plus préférentiellement Eai ≤ 2,50 x Ebj.

Dans des modes de réalisation permettant, comme décrit précédemment de maximiser le compromis entre le gain en masse et l'efficacité de l'obturation d'un éventuel orifice dans chaque découpure circonférentielle principale, pour chaque valeur de i allant de 1 à N, au moins 50% des valeurs de j allant de 1 à Q, de préférence au moins 75% des valeurs de j allant de 1 à Q et plus préférentiellement 100% des valeurs de j allant de 1 à Q sont telles que Eai-Ebj ≥ 0,5 mm, de préférence Eai-Ebj ≥ 1,0 mm.

Comme déjà indiqué ci-dessus, dans des pneumatiques pour véhicule de tourisme et pour véhicule utilitaire décrits précédemment, chaque épaisseur moyenne Eai va avantageusement de 2,0 mm à 5,0 mm, de préférence de 2,5 mm à 4,5 mm et chaque épaisseur moyenne Ebj va avantageusement de 0,5 mm à 4,0 mm, de préférence de 1,0 mm à 3,0 mm.

Dans la plupart des pneumatiques pour véhicule de tourisme et pour véhicule utilitaire, N=2, 3 ou 4.

Dans des modes de réalisation dans lesquels les découpures circonférentielles principales sont des rainures circonférentielles principales relativement larges, notamment dans le cas de pneumatiques pour véhicule de tourisme et pour véhicule utilitaire, et présentent un risque très élevé de subir une perforation, la ou chaque découpure circonférentielle principale présente une largeur axiale supérieure ou égale à 1,0 mm, de préférence supérieure ou égale à 5,0 mm et plus préférentiellement supérieure ou égale à 8,0 mm et encore plus préférentiellement allant de 8,0 mm à 20,0 mm.

Dans des modes de réalisation dans lesquels les découpures circonférentielles principales sont relativement profondes, notamment dans le cas de pneumatiques pour véhicule de tourisme et pour véhicule utilitaire, et présentent un risque très élevé de subir une perforation, la ou chaque découpure circonférentielle principale présente une profondeur allant de 4,0 mm à la hauteur de sculpture, de préférence allant de 5,0 mm à la hauteur de sculpture et plus préférentiellement allant de 5,5 mm à la hauteur de sculpture.

Avantageusement, la couche de produit auto-obturant présente, à proximité de la découpure circonférentielle principale, une largeur axiale significative par rapport à la largeur axiale de la découpure circonférentielle principale pour pouvoir obturer efficacement un éventuel orifice. Ainsi, la couche de produit auto-obturant comprend au moins une portion axiale, dite épaisse, la ou chaque portion axiale épaisse étant au moins en partie confondue avec tout ou partie de la ou de chaque portion axiale s'étendant axialement au droit de la ou de chaque découpure circonférentielle principale, la ou chaque portion axiale épaisse étant axialement délimitée par deux points d'inflexion adjacents de la courbe de surface radialement intérieure de la couche de produit auto-obturant, l'épaisseur de ladite portion axiale épaisse augmentant en se déplaçant axialement vers l'intérieur de ladite portion axiale épaisse depuis chacun desdits points d'inflexion, la largeur axiale Wx de la portion axiale épaisse étant telle que Wx/Lcx ≥ 0,50, de préférence Wx/Lcx > 1,00 avec Lcx étant la largeur axiale de la découpure circonférentielle principale.

Ainsi, comme défini ci-dessus, la portion axiale épaisse peut présenter une largeur axiale inférieure à la largeur axiale de la découpure circonférentielle principale, mais néanmoins suffisante pour permettre d'obturer efficacement un éventuel orifice. Dans ce cas, la portion axiale épaisse est confondue avec une partie de la portion axiale de la couche de produit auto-obturant s'étendant au droit de la découpure circonférentielle principale. La portion axiale épaisse peut également présenter, de façon préférée, une largeur axiale supérieure ou égale à la largeur axiale de la découpure circonférentielle principale. Dans ce cas, une partie de la portion axiale épaisse est confondue avec la portion axiale de la couche de produit auto-obturant s'étendant au droit de la découpure circonférentielle principale.

Avantageusement, Wx/Lcx ≤ 4,00, de préférence Wx/Lcx ≤ 3,00, plus préférentiellement Wx/Lcx ≤ 2,00, encore plus préférentiellement Wx/Lcx ≤ 1,50 et très préférentiellement Wx/Lcx ≤ 1,25. Afin de ne pas trop alourdir le pneumatique, il est préférable de ne pas prévoir une portion axiale épaisse axialement trop large sauf si cela s'avère préférable pour optimiser la performance anti-crevaison, notamment aux épaules du pneumatique. Ainsi, les portions axiales épaisses correspondant aux découpures circonférentielles principales les plus axialement extérieures pourront ne pas vérifier les conditions précédentes alors que les autres portions axiales épaisses correspondant aux autres découpures circonférentielles principales pourront les vérifier.

De façon conventionnelle, le pneumatique comprend un sommet, deux flancs, deux bourrelets, chaque flanc reliant chaque bourrelet au sommet. Toujours de façon conventionnelle, le sommet comprend la bande de roulement et une armature de sommet agencée radialement à l'intérieur de la bande de roulement. Le pneumatique comprend également une armature de carcasse ancrée dans chaque bourrelet et s'étendant radialement dans chaque flanc et axialement dans le sommet radialement intérieurement à l'armature de sommet.

De façon conventionnelle, l'armature de sommet comprend au moins une couche de sommet comprenant des éléments de renforcement. Ces éléments de renforcement sont préférentiellement des éléments filaires textiles ou métalliques.

Dans des modes de réalisation permettant l'obtention des performances de pneumatiques dits radiaux comme défini par l'ETRTO, l'armature de carcasse comprend au moins une couche de carcasse, la ou chaque couche de carcasse comprenant des éléments de renforcement filaires de carcasse, chaque élément de renforcement filaire de carcasse s'étendant sensiblement selon une direction principale formant avec la direction circonférentielle du pneumatique, un angle, en valeur absolue, allant de 80° à 90°.

L'invention sera mieux comprise à la lecture de la description qui va suivre, donnée uniquement à titre d'exemple non limitatif et faite en se référant aux dessins dans lesquels:
- la figure 1 est une vue, dans un plan de coupe méridien parallèle à l'axe de rotation du pneumatique, d'un pneumatique selon un premier mode de réalisation de l'invention,
- la figure 2 est une vue de dessus de la bande de roulement du pneumatique de la figure 1,
- la figure 3 est une vue, dans un plan de coupe méridien parallèle à l'axe de rotation du pneumatique, illustrant le procédé de fabrication du pneumatique de la figure 1, et
- la figure 4 est une vue analogue à celle de la figure 1 d'un pneumatique selon un deuxième mode de réalisation de l'invention.

Dans les figures relatives au pneumatique, on a représenté un repère X, Y, Z correspondant aux directions habituelles respectivement axiale (Y), radiale (Z) et circonférentielle (X) d'un pneumatique.

Dans la description qui suit, les mesures réalisées sont réalisées sur un pneumatique non chargé et non gonflé ou sur une coupe de pneumatique dans un plan méridien.

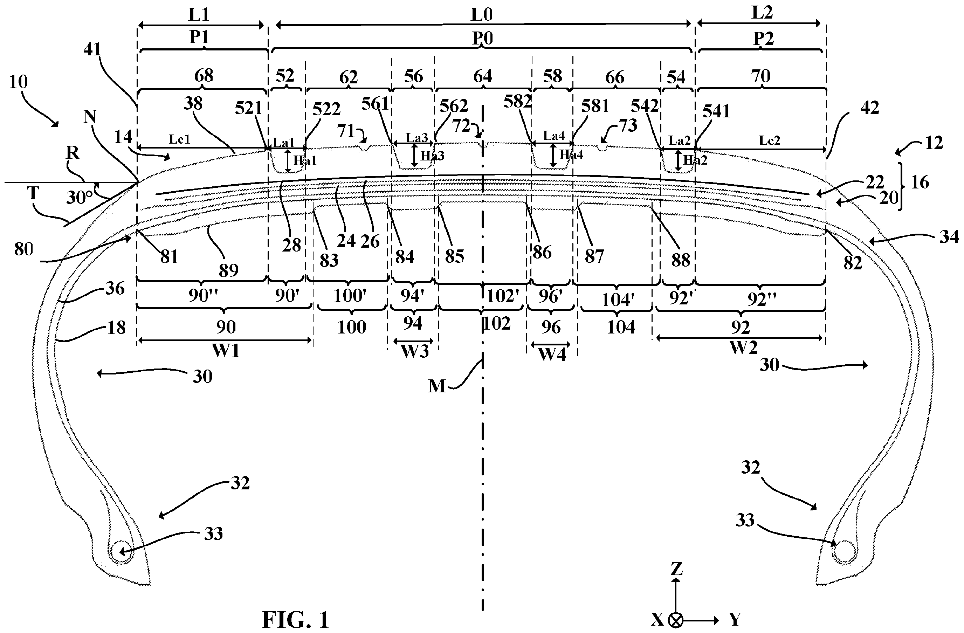

On a représenté sur la figure 1 un pneumatique, conforme à l'invention et désigné par la référence générale 10. Le pneumatique 10 présente une forme sensiblement torique autour d'un axe de révolution sensiblement parallèle à la direction axiale Y. Le pneumatique 10 est destiné à un véhicule de tourisme et présente des dimensions 245/45 R18. Sur les différentes figures, le pneumatique 10 est représenté à l'état neuf, c'est-à-dire n'ayant pas encore roulé.

Le pneumatique 10 comprend un sommet 12 comprenant une bande de roulement 14 destinée à entrer en contact avec un sol lors du roulage et une armature de sommet 16 s'étendant dans le sommet 12 selon la direction circonférentielle X. Le pneumatique 10 comprend également une couche d'étanchéité 18 à un gaz de gonflage étant destiné à délimiter une cavité interne fermée avec un support de montage du pneumatique 10 une fois le pneumatique 10 monté sur le support de montage, par exemple une jante.

L'armature de sommet 16 comprend une armature de travail 20 et une armature de frettage 22. L'armature de travail 16 comprend au moins une couche de travail et ici comprend deux couches de travail comprenant une couche de travail 24 radialement intérieure agencée radialement à l'intérieur d'une couche de travail 26 radialement extérieure.

L'armature de frettage 22 comprend au moins une couche de frettage et comprend ici une couche de frettage 28.

L'armature de sommet 16 est surmontée radialement de la bande de roulement 14. Ici, l'armature de frettage 22, ici la couche de frettage 28, est agencée radialement à l'extérieur de l'armature de travail 20 et est donc radialement intercalée entre l'armature de travail 20 et la bande de roulement 14.

Le pneumatique 10 comprend deux flancs 30 prolongeant le sommet 12 radialement vers l'intérieur. Le pneumatique 10 comporte en outre deux bourrelets 32 radialement intérieurs aux flancs 30. Chaque flanc 30 relie chaque bourrelet 32 au sommet 12.

Le pneumatique 10 comprend une armature de carcasse 34 ancrée dans chaque bourrelet 32, en l'espèce est enroulée autour d'une tringle 33. L'armature de carcasse 34 s'étend radialement dans chaque flanc 30 et axialement dans le sommet 12, radialement intérieurement à l'armature de sommet 16. L'armature de sommet 16 est agencée radialement entre la bande de roulement 14 et l'armature de carcasse 34. L'armature de carcasse 34 comprend au moins une couche de carcasse 36.

Chaque couche de travail 24, 26 de frettage 28 et de carcasse 36 comprend une matrice élastomérique dans laquelle sont noyés un ou des éléments de renfort filaires de la couche correspondante.

L'armature de frettage 22, ici la couche de frettage 28, comprend un ou plusieurs éléments de renfort filaires de frettage enroulés circonférentiellement hélicoïdalement selon une direction principale formant, avec la direction circonférentielle X du pneumatique 10, un angle AF, en valeur absolue, inférieur ou égal à 10°, de préférence inférieur ou égal à 7° et plus préférentiellement inférieur ou égal à 5°. Ici, AF=-5°.

Chaque couche de travail radialement intérieure 24 et radialement extérieure 26 comprend des éléments de renfort filaires de travail s'étendant selon des directions principales formant avec la direction circonférentielle X du pneumatique 10, des angles respectivement AT1 et AT2 d'orientations opposées et en valeur absolue, strictement supérieurs à 10°, de préférence allant de 15° à 50° et plus préférentiellement allant de 15° à 30°. Ici, AT1=-26° et AT2=+26°.

La couche de carcasse 36 comprend des éléments de renfort filaires de carcasse s'étendant selon une direction principale D3 formant avec la direction circonférentielle X du pneumatique 10, un angle AC, en valeur absolue, supérieur ou égal à 60°, de préférence allant de 80° à 90° et ici AC=+90°.

Chaque élément de renfort filaire de frettage comprend classiquement deux brins multifilamentaires, chaque brin multifilamentaire étant constitué d'un filé de monofilaments de polyamide aliphatique, ici de nylon d'un titre égal à 140 tex, ces deux brins multifilamentaires étant mis en hélice individuellement à 250 tours par mètre dans un sens puis mis en hélice ensemble à 250 tours par mètre dans le sens opposé. Ces deux brins multifilamentaires sont enroulés en hélice l'un autour de l'autre. En variante, on pourra utiliser un élément de renfort filaire de frettage comprenant un brin multifilamentaire constitué d'un filé de monofilaments de polyamide aliphatique, ici de nylon d'un titre égal à 140 tex et un brin multifilamentaire constitué d'un filé de monofilaments de polyamide aromatique, ici d'aramide d'un titre égal à 167 tex, ces deux brins multifilamentaires étant mis en hélice individuellement à 290 tours par mètre dans un sens puis mis en hélice ensemble à 290 tours par mètre dans le sens opposé. Ces deux brins multifilamentaires sont enroulés en hélice l'un autour de l'autre. Dans cette variante, on aura AT1=-29° et AT2=+29°

Chaque élément de renfort filaire de travail est un assemblage de deux monofilaments en acier enroulés en hélice au pas de 14 mm, chaque monofilament en acier présentant un diamètre égal à 0,30 mm. En variante, on pourra également utiliser un assemblage de six monofilaments en acier présentant un diamètre égal à 0,23 mm et comprenant une couche interne de deux monofilaments enroulés ensemble en hélice au pas de 12,5 mm dans un premier sens, par exemple le sens Z, et une couche externe de quatre monofilaments enroulés ensemble en hélice autour de la couche interne au pas de 12,5 mm dans un deuxième sens opposé au premier sens, par exemple le sens S. Dans une autre variante, chaque élément de renfort filaire de travail est constitué d'un monofilament en acier présentant un diamètre égal à 0,30 mm. D'une manière plus générale, les monofilaments en acier présentent des diamètres allant de 0,25 mm à 0,32 mm.

Chaque élément de renfort filaire de carcasse comprend classiquement deux brins multifilamentaires, chaque brin multifilamentaire étant constitué d'un filé de monofilaments de polyester, ici de PET, ces deux brins multifilamentaires étant mis en hélice individuellement à 240 tours par mètre dans un sens puis mis en hélice ensemble à 240 tours par mètre dans le sens opposé. Chacun de ces brins multifilamentaires présente un titre égal à 220 tex. Dans d'autres variantes, on pourra utiliser des titres égaux à 144 tex et des torsions égales à 420 tours par mètre ou des titres égaux à 334 tex et des torsions égales à 270 tours par mètre.

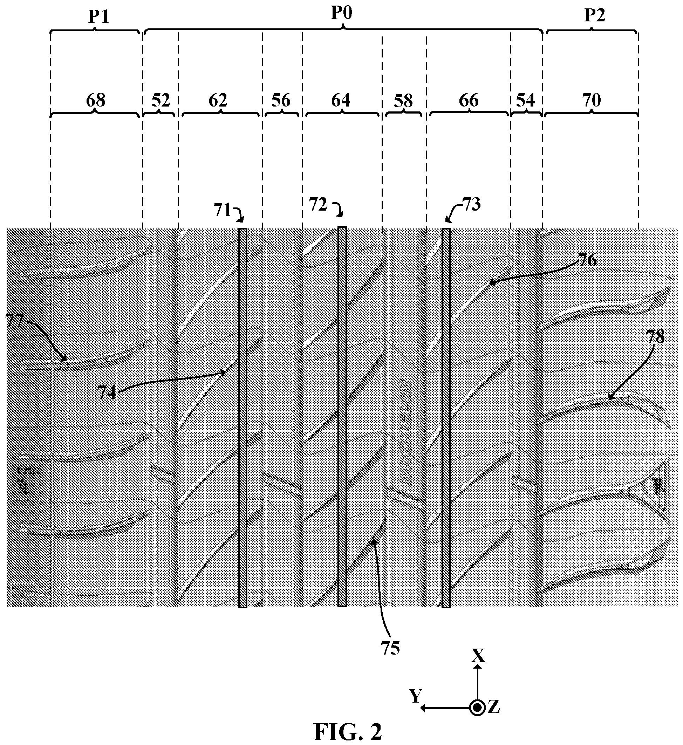

En référence aux figures 1 et 2, la bande de roulement 14 comprend une surface de roulement 38 par l'intermédiaire de laquelle la bande de roulement 14 entre en contact avec le sol. La surface de roulement 38 est destinée à entrer en contact avec le sol lors du roulage du pneumatique 10 sur le sol. La bande de roulement est délimitée axialement par des premier et deuxième bords axiaux 41, 42 passant par chaque point N agencé de part et d'autre du plan médian M et pour lequel l'angle entre la tangente T à la surface de roulement 38 et une droite parallèle R à la direction axiale Y passant par ce point est égal à 30°.

La bande de roulement 14 comprend une portion axialement centrale P0 et des première et deuxième portions axialement latérales P1, P2 agencées axialement à l'extérieur de la portion axialement centrale P0 de part et d'autre axialement de la portion axialement centrale P0 par rapport au plan médian M du pneumatique 10.

Sans que cela soit spécifique au mode de réalisation illustré, la portion axialement centrale P0 présente une largeur axiale L0 supérieure ou égale à 50%, de préférence supérieure ou égale à 60% et inférieure ou égale à 80%, de préférence inférieure ou égale à 70% de la largeur axiale L de la surface de roulement 38 du pneumatique 10 à l'état neuf. Chaque première et deuxième portion axialement latérale P1, P2 présente une largeur axiale L1, L2 inférieure ou égale à 25%, de préférence inférieure ou égale à 20% et supérieure ou égale à 5%, de préférence supérieure ou égale à 10% de la largeur axiale L de la surface de roulement 38 du pneumatique 10 à l'état neuf. Le rapport de la largeur axiale L0 de la portion centrale P0 sur la largeur axiale L1, L2 de chaque première et deuxième portion axialement latérale P1, P2 est supérieur ou égale à 3,0, de préférence va de 3,0 à 5,0 et plus préférentiellement va de 4,0 à 4,5.

La portion axialement centrale P0 comprend N>1 des découpures circonférentielles principales, ici N rainures circonférentielles principales, comprenant des première, deuxième, troisième et quatrième découpures circonférentielles principales respectivement désignées par les références 52, 54, 56, 58. Les première et deuxième découpures circonférentielles principales 52, 54 sont agencées axialement de part et d'autre du plan médian M du pneumatique 10 et sont les découpures circonférentielles principales axialement les plus extérieures de la bande de roulement 14.

Chaque découpure circonférentielle principale 52 à 58 est axialement délimitée par une extrémité axialement extérieure respectivement désignée par la référence 521, 541, 561, 581 et par une extrémité axialement intérieure respectivement désignée par la référence 522, 542, 562, 582. La portion axialement centrale P0 s'étend axialement depuis l'extrémité axialement extérieure 521 de la première découpure circonférentielle principale 52 jusqu'à l'extrémité axialement extérieure 541 de la deuxième découpure circonférentielle principale 54.

Chaque découpure circonférentielle principale 52, à 58 présente une profondeur respectivement désignée par la référence Ha1, Ha2, Ha3, Ha4 et allant de 4,0 mm à la hauteur de sculpture Hs, de préférence allant de 5,0 mm à la hauteur de sculpture Hs et plus préférentiellement allant de 5,5 mm à la hauteur de sculpture Hs. Chaque profondeur Ha1, Ha2, Ha3, Ha4 est supérieure ou égale à 50% de la hauteur de sculpture Hs. Ici, Hs=Ha3=Ha4=6,5 mm et Ha1=Ha2=6,0 mm. Ainsi, chaque découpure circonférentielle principale 52, 54, 56, 58 est telle que Hai/Hs ≥ 75% et ici telle que Hai/Hs ≥ 90% avec i allant de 1 à 4 car Hs=6,5 mm.

Chaque découpure circonférentielle principale 52 à 58 présente une largeur axiale respectivement désignée par la référence La1, La2, La3, La4 et supérieure ou égale à 1,0 mm, de préférence supérieure ou égale à 5,0 mm et plus préférentiellement supérieure ou égale à 8,0 mm et encore plus préférentiellement allant de 8,0 mm à 20,0 mm. Ici, La1=La2=10,0 mm et La3=La4=12,5 mm.

La portion axialement centrale P0 comprend Q=N-1≥1 nervures centrales et ici des première, deuxième et troisième nervures centrales respectivement désignées par les références 62, 64, 66. Chaque nervure centrale 62, 64, 66 est agencée axialement entre deux des découpures circonférentielles principales adjacentes 52 à 58 et est délimitée axialement par deux découpures circonférentielles principales adjacentes 52 à 58.

Chaque nervure centrale 62, 64, 66 est axialement délimitée par une extrémité axialement intérieure et par une extrémité axialement extérieure, chaque extrémité axialement intérieure et extérieure étant une extrémité axialement intérieure ou extérieure des découpures circonférentielles principales 52 à 58. Les extrémités axialement intérieure et extérieure de chaque nervure centrale 62, 64, 66 sont adjacentes l'une à l'autre. En l'espèce, la première nervure centrale 62 est axialement délimitée par l'extrémité axialement intérieure 522 de la première découpure circonférentielle principale 52 et par l'extrémité axialement extérieure 561 de la troisième découpure circonférentielle principale 56. La deuxième nervure centrale 64 est axialement délimitée par l'extrémité axialement intérieure 562 de la troisième découpure circonférentielle principale 56 et par l'extrémité axialement intérieure 582 de la quatrième découpure circonférentielle principale 58. La troisième nervure centrale 66 est axialement délimitée par l'extrémité axialement extérieure 581 de la quatrième découpure circonférentielle principale 58 et par l'extrémité axialement intérieure 542 de la deuxième découpure circonférentielle principale 54.

La portion axialement centrale P0 comprend des découpures circonférentielle complémentaires ménagées dans les nervures centrales 62, 64, 66. Ici, chaque nervure centrale 62, 64, 66 comprend respectivement une découpure circonférentielle complémentaire 71, 72, 73. Chaque découpure circonférentielle complémentaire 71, 72, 73 présente une profondeur strictement inférieure à 50% de la hauteur de sculpture Hs, de préférence inférieure ou égale à 30% de la hauteur de sculpture Hs et plus préférentiellement allant de 10% à 30% de la hauteur de sculpture Hs et ici allant de 1,0 mm à 4,0 mm et ici égale à 2,0 mm. Chaque découpure circonférentielle complémentaire 71, 72, 73 présente respectivement une largeur axiale allant de 4% à 15%, de préférence de 4% à 10% respectivement de chaque largeur axiale de chaque nervure centrale 62, 64, 66 et ici inférieure ou égale à 3,0 mm, de préférence allant de 1,0 mm à 3,0 mm et ici égale à 1,0 mm.

En outre, chaque nervure centrale 62, 64, 66 comprend des découpures transversales 74, 75, 76 satisfaisant, pour au moins 50%, de préférence pour au moins 75% et plus préférentiellement pour 100% du nombre de découpures transversales 74, 75, 76 de chaque nervure centrale 62, 64, 66, au moins une des conditions suivantes :
- la découpure transversale de la nervure centrale présente une largeur strictement inférieure à 1,6 mm, de préférence strictement inférieure à 1,0 mm et plus préférentiellement strictement inférieure à 0,7 mm,
- la découpure transversale de la nervure centrale présente une profondeur H telle que H/Hs < 50%, de préférence H/Hs ≤ 30%.

En l'espèce, chaque nervure centrale 62, 64, 66 comprend des découpures transversales 74, 75, 76 satisfaisant pour 100% du nombre de découpures transversales 74, 75, 76 de chaque nervure centrale 62, 64, 66 la condition selon laquelle chaque découpure transversale 74, 75, 76 présente une largeur strictement inférieure à 0,7 mm. A ce titre, chaque nervure centrale 62, 64, 66 est dite faiblement découpée.

La première portion axialement latérale P1 s'étend axialement depuis la première extrémité axiale 41 de la bande de roulement 14 jusqu'à l'extrémité axialement extérieure 521 de la première découpure circonférentielle principale 52. La deuxième portion axialement latérale P2 s'étend axialement depuis la deuxième extrémité axiale 42 de la bande de roulement 14 jusqu'à l'extrémité axialement extérieure 541 de la deuxième découpure circonférentielle principale 54.

Chaque première et deuxième portion axialement latérale P1, P2 comprend respectivement une première et une deuxième nervure latérale respectivement désignées par les références 68, 70 et ici est constituée respectivement par chaque première et deuxième nervure latérale 68, 70. Le pneumatique 10 comprend donc P=2>1 nervures latérales. Ainsi, la première nervure latérale 68 est axialement délimitée par deux extrémités adjacentes l'une à l'autre, ici par l'extrémité axiale 41 de la bande de roulement 14 et l'extrémité axialement extérieure 521 de la première découpure circonférentielle principale 52. La deuxième nervure latérale 70 est axialement délimitée par deux extrémités adjacentes l'une à l'autre, ici par l'extrémité axiale 42 de la bande de roulement 14 et l'extrémité axialement extérieure 541 de la deuxième découpure circonférentielle principale 54. Chaque première et deuxième nervure latérale 68, 70 présente une largeur axiale respectivement désignée par la référence Lc1, Lc2 avec ici Lc1=Lc2=33 mm.

Chaque première et deuxième nervure latérale 68, 70 comprend des découpures transversales 77, 78 présentant une profondeur Ht telle que Ht/Hs ≥ 50%, de préférence Ht/Hs ≥ 75% et de préférence Ht/Hs ≥ 90%. Chaque découpure transversale 77, 78 présente une profondeur Ht allant de 2,0 mm à la hauteur de sculpture Hs, de préférence allant de 4,0 mm à la hauteur de sculpture Hs et plus préférentiellement allant de 5,0 mm à la hauteur de sculpture Hs et ici Ht=6,0 mm. Chaque découpure transversale 77, 78 présente une largeur supérieure ou égale à 0,7 mm de préférence supérieure ou égale à 1,0 mm et plus préférentiellement supérieure ou égale à 1,6 mm. A ce titre, chaque nervure latérale 68, 70 est dite profondément découpée.

En référence à la figure 1, le pneumatique 10 comprend également une couche 80 d'un produit auto-obturant s'étendant circonférentiellement radialement à l'intérieur d'une partie de la couche interne d'étanchéité 18 et au moins en partie au droit de la bande de roulement 14. Le produit auto-obturant est connu de l'état de la technique et pourra être choisi notamment parmi les produits décrits dans les documents WO2020009849, WO2011092122, WO2011092123. La couche de produit auto-obturant est délimitée axialement par deux extrémités axiales 81, 82 agencée respectivement à une distance axiale inférieure ou égale à 20%, de préférence inférieure ou égale à 10% de la largeur axiale de la bande de roulement par rapport à respectivement chaque extrémité axiale 41, 42 de la bande de roulement 14. En l'espèce, chaque extrémité axiale 81, 82 est radialement alignée respectivement avec chaque extrémité 41, 42 même si on préférera les modes de réalisation dans lesquels chaque extrémité axiale 81, 82 est agencée axialement à l'intérieur de chaque extrémité axiale 81, 82.

La couche de produit auto-obturant 80 comprend L≥1, ici L=4>1 portions axiales dites épaisses et ici désignées par les références 90, 92, 94, 96 ainsi que M≥1, ici M=3>1 portions axiales dites minces et ici désignées par les références 100, 102, 104. Comme illustré sur la figure 1, chaque portion axiale épaisse et mince est délimitée par deux points d'inflexion 81, 82, 83, 84, 85, 86, 87, 88 de la courbe de surface 89 radialement intérieure de la couche de produit auto-obturant 80. Chaque portion axiale épaisse 90 à 96 est axialement délimitée par deux points d'inflexion adjacents de sorte que l'épaisseur de chaque portion axiale épaisse 90 à 96 augmente en se déplaçant axialement vers l'intérieur de chaque portion axiale épaisse depuis chacun desdits points d'inflexion. Chaque portion axiale mince 100 à 104 est axialement délimitée par deux points d'inflexion adjacents de sorte que l'épaisseur de ladite portion axiale mince diminue en se déplaçant axialement vers l'intérieur de chaque portion axiale mince 100 à 104 depuis chacun desdits points d'inflexion.

Chaque portion axiale épaisse 90 à 96 et mince 100 à 104 s'étend circonférentiellement continûment sur au moins 50%, de préférence au moins 75% et plus préférentiellement sur au moins 95% et ici sur 100% de la longueur circonférentielle de la couche de produit auto-obturant 80. L'épaisseur moyenne EE1, EE2, EE3, EE4 respectivement de chaque portion axiale épaisse 90, 92, 94, 96 et l'épaisseur moyenne EM1, EM2, EM3 respectivement de chaque portion axiale mince 100, 102, 104 est circonférentiellement sensiblement constante sur au moins 50%, de préférence sur au moins 75% et plus préférentiellement sur au moins 95% et ici sur 100% de la longueur circonférentielle de la couche de produit auto-obturant 80. En l'espèce, EE1=EE2=EE3=EE4=3,45 mm et EM1=EM2=EM3=1,95 mm.

Chaque portion axiale épaisse 90, 92, 94, 96 comprend respectivement une portion axiale 90', 92', 94', 96' s'étendant axialement au droit respectivement de chaque découpure circonférentielle principale 52, 54, 56, 58. La couche de produit auto-obturant 80 comprend donc N=4 portions axiales 90' à 96' s'étendant axialement au droit d'une des N découpures circonférentielles principales 52 à 58. Chaque portion axiale 90' à 96' présente une épaisseur moyenne Eai > 0 de produit auto-obturant avec i allant de 1 à 4. En l'espèce, Ea1=Ea2=Ea3=Ea4=3,50 mm.

Chaque portion axiale épaisse 90, 92 comprend également respectivement une portion axiale 90", 92" s'étendant axialement au droit de la première et de la deuxième nervure latérale 68, 70. Chaque portion 90", 92" présente respectivement une épaisseur moyenne Ec1>0, Ec2>0. En l'espèce, Ec1=Ec2=3,50 mm.

Chaque portion axiale mince 100, 102, 104 comprend respectivement une portion axiale 100', 102', 104' s'étendant axialement au droit respectivement de chaque nervure centrale 62, 64, 66. La couche de produit auto-obturant 80 comprend donc Q=N-1=3 portions axiales 100', 102', 104' s'étendant axialement au droit d'une des Q nervures centrales 62, 64, 66. Chaque portion axiale 100', 102', 104' est agencée axialement entre deux portions axiales adjacentes 90' à 96'. Chaque portion axiale 100', 102', 104' présente une épaisseur moyenne Ebj ≥ 0 de produit auto-obturant avec j allant de 1 à 3. En l'espèce, Eb1=Eb2=Eb3=2,00 mm.

On notera que pour chaque valeur de i allant de 1 à N, au moins 50% des valeurs de j allant de 1 à Q, de préférence au moins 75% des valeurs de j allant de 1 à Q et ici 100% des valeurs de j allant de 1 à Q sont telles que Ebj < Eai, Ebj<Ec1 et Ebj<Ec2.

On notera également que pour chaque valeur de i allant de 1 à N, au moins 50% des valeurs de j allant de 1 à Q, de préférence au moins 75% des valeurs de j allant de 1 à Q et ici pour 100% des valeurs de j allant de 1 à Q sont telles que d'une part, Eai ≥ 1,10 x Ebj, de préférence Eai ≥ 1,30 x Ebj et plus préférentiellement Eai ≥ 1,50 x Ebj et d'autre part, Eai ≤ 5,00 x Ebj, de préférence Eai ≤ 4,00 x Ebj et plus préférentiellement Eai ≤ 2,50 x Ebj. Ici, pour chaque valeur de i allant de 1 à N, 100% des valeurs de j allant de 1 à Q sont telles que Eai/Ebj=1,75.

On notera également que au moins 50% des valeurs de j allant de 1 à Q, de préférence au moins 75% des valeurs de j allant de 1 à Q et ici pour 100% des valeurs de j allant de 1 à Q sont telles que d'une part, Ec1 ≥ 1,10 x Ebj et Ec2 ≥ 1,10 x Ebj, de préférence Ec1 ≥ 1,30 x Ebj et Ec2 ≥ 1,30 x Ebj et plus préférentiellement Ec1 ≥ 1,50 x Ebj et Ec2 ≥ 1,50 x Ebj et, d'autre part, Ec1 ≤ 5,00 x Ebj et Ec2 ≤ 5,00 x Ebj, de préférence Ec1 ≤ 4,00 x Ebj et Ec2 ≤ 4,00 x Ebj et plus préférentiellement Ec1 ≤ 2,50 x Ebj et Ec2 ≤ 2,50 x Ebj. Ici, 100% des valeurs de j allant de 1 à Q sont telles que Ec1/Ebj=1,75 et Ec2/Ebj=1,75.

Chaque portion axiale épaisse 90, 92, 94, 96 est au moins en partie confondue avec tout ou partie respectivement de chaque portion axiale 90', 92', 94', 96'. En l'espèce, comme cela est visible sur la figure 1, chaque portion axiale épaisse 90, 92, 94, 96 présente une largeur axiale supérieure ou égale à la largeur axiale respectivement de chaque découpure circonférentielle principale 52, 54, 56, 58. Ainsi, chaque portion axiale épaisse 94, 96 présente respectivement une largeur axiale W3, W4 telle que d'une part, W3/La3 ≤ 4,00 et W4/La4 ≤ 4,00, de préférence W3/La3 ≤ 3,00 W4/La4 ≤ 3,00, plus préférentiellement W3/La3 ≤ 2,00 et W2/La2 ≤ 2,00, encore plus préférentiellement W3/La3 ≤ 1,50 et W4/La4 ≤ 1,50 et très préférentiellement W3/La3 ≤ 1,25 et W4/La4 ≤ 1,25. En l'espèce, W3=W4=13,5 mm de sorte que W3/La3= W4/La4=1,08.

En outre, chaque portion axiale épaisse 90, 92 est au moins en partie confondue avec tout ou partie de chaque portion axiale 90", 92". En l'espèce, comme cela est visible sur la figure 1, chaque portion axiale épaisse 90, 92 présente une largeur axiale supérieure ou égale à la largeur axiale respectivement de chaque découpure circonférentielle principale 90", 92". Ainsi, chaque portion axiale épaisse 90, 92 présente respectivement une largeur axiale W1, W2 telle que d'une part, W1/Lc1 ≥ 0,50 et W2/Lc2 ≥ 0,50, de préférence W1/Lc1 > 1,00 et W2/Lc2 > 1,00. En l'espèce, W1=W2=44 mm de sorte que W1/Lc1 = W2/Lc2 =1,33.

En outre, on a W1/La1 ≥ 0,50 et W2/La2 ≥ 0,50, de préférence W1/La1 > 1,00 et W2/La2 > 1,00 et ici W1/La1 = W2/La2 =4,40.

L'ensemble des conditions satisfaites par les différentes portions axiales 90 à 96, 90' à 96', 90", 92", 100 à 104 et 100' à 104' le sont sur au moins 50%, de préférence sur au moins 75% et plus préférentiellement sur au moins 95% et ici sur 100% de la longueur circonférentielle de la couche de produit auto-obturant 80.

Chaque portion axiale 90' à 96', 90", 92" et 100' à 104' de la couche de produit auto-obturant s'étendant au droit de chaque découpure 52 à 58 et de chaque nervure 62 à 70 s'étend circonférentiellement continûment sur au moins 50%, de préférence sur au moins 75% et plus préférentiellement sur au moins 95% et ici sur 100% de la longueur circonférentielle de la couche de produit auto-obturant 80.

L'épaisseur moyenne Ea1 à Ea4, Ec1, Ec2 et Eb1 à Eb3 de chaque portion axiale 90' à 96', 90", 92" et 100' à 104' est circonférentiellement sensiblement constante sur au moins 50%, de préférence sur au moins 75% et plus préférentiellement sur au moins 95% et ici sur 100% de la longueur circonférentielle de la couche de produit auto-obturant 80.

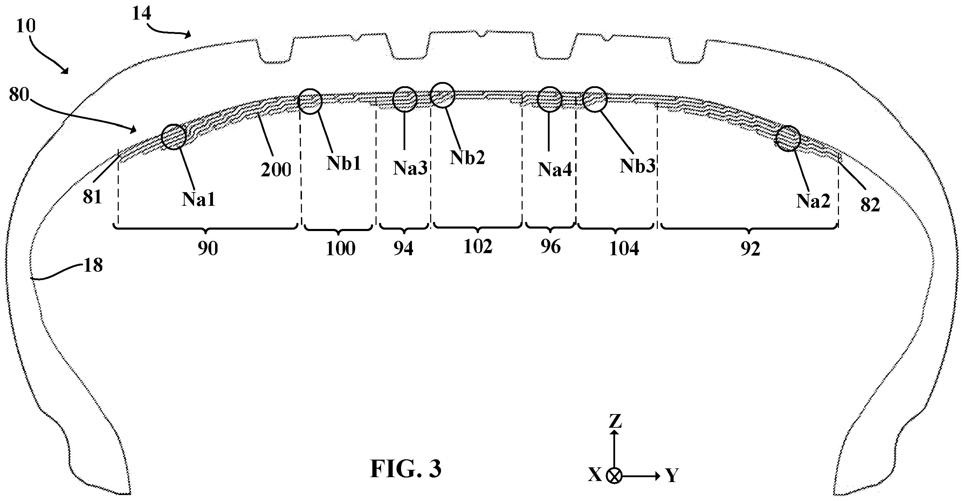

On va maintenant décrire un procédé de fabrication du pneumatique 10 en référence à la figure 3.

On dispose d'un pneumatique à l'état neuf dans son état vulcanisé dépourvu de la couche de produit auto-obturant 80.

On dispose d'un dispositif d'extrusion et d'un dispositif d'application d'une bande 200 du produit auto-obturant présentant une largeur égale à 15 mm et une épaisseur égale à 0,9 mm. Un tel dispositif est notamment décrit dans WO2015/173120. En variante, on pourra utiliser un cordon du produit auto-obturant.

On enroule sur plusieurs tours circonférentiels, ici sur 33 tours circonférentiels, la bande 200 de produit auto-obturant radialement à l'intérieur de la couche d'étanchéité 18 du pneumatique. Cette étape d'enroulage est conduite selon une loi d'enroulage des tours circonférentiels de la bande 200 dont le résultat est illustré sur la figure 3.

On démarre l'enroulage de la bande 200 en partant de l'extrémité axiale 81 et on arrête l'enroulage de la bande 200 en arrivant à l'extrémité axiale 82. On enroule la bande 200 sans interrompre la bande 200 entre les deux extrémités axiales 81, 82.

Lors de l'étape d'enroulage, on enroule la bande 200 sur elle-même a sur Nai > 1 tours circonférentiels radialement superposés sur chaque portion axiale épaisse 90, 92, 94, 96 de la couche de produit auto-obturant 80, i allant de 1 à 4. On enroule la bande 200 sur elle-même sur Nbj > 1 tours circonférentiels radialement superposés sur chaque portion axiale mince 100, 102, 104 de la couche de produit auto-obturant 80, j allant de 1 à M. Pour toute valeur de i allant de 1 à L, au moins 50% des valeurs de j allant de 1 à M, de préférence au moins 75% des valeurs de j allant de 1 à M et ici 100% des valeurs de j allant de 1 à M sont telles que Nbj < Nai. En l'occurrence, on a Na1=Na2=5 pour chaque portion axiale épaisse 90 et 92, Na3=Na4=4 pour chaque portion axiale épaisse 94, 96, Nb1=Nb2=Nb3=3 pour chaque portion axiale mince 100, 102, 104.

On notera que, pour chaque valeur de i allant de 1 à L, au moins 50% des valeurs de j allant de 1 à M, de préférence au moins 75% des valeurs de j allant de 1 à M et ici 100% des valeurs de j allant de 1 à M sont telles que, d'une part Nai/Nbj ≥ 1,20 et, d'autre part, Nai/Nbj ≤ 3,00, de préférence Nai/Nbj ≤ 2,75 et plus préférentiellement Nai/Nbj ≤ 2,50.

Pour réaliser cette étape d'enroulage, la loi d'enroulage comprend plusieurs paramètres permettant de faire varier axialement l'épaisseur de la couche de produit auto-obturant 80. Ces paramètres comprennent un pas d'enroulage de la bande 200, une vitesse d'enroulage de la bande 200 par rapport à un dispositif d'application de la bande 200, une vitesse de déplacement axial du pneumatique 10 par rapport à un dispositif d'application de la bande 200 dans le pneumatique 10, un débit d'extrusion de la bande 200 d'un dispositif d'extrusion de la bande 200, une largeur de la bande 200 ou encore une épaisseur de la bande 200. Il est possible de choisir de faire varier un seul de ces paramètres ou bien plusieurs simultanément. Avantageusement, on a ici fait varier uniquement le pas d'enroulage de la bande 200 afin de faire varier axialement l'épaisseur de la couche de produit auto-obturant 80 sur au moins 50%, de préférence sur au moins 75%, plus préférentiellement sur au moins 95% et ici sur 100% de la longueur circonférentielle de la couche de produit auto-obturant 80 et d'obtenir la couche illustrée sur la figure 3.

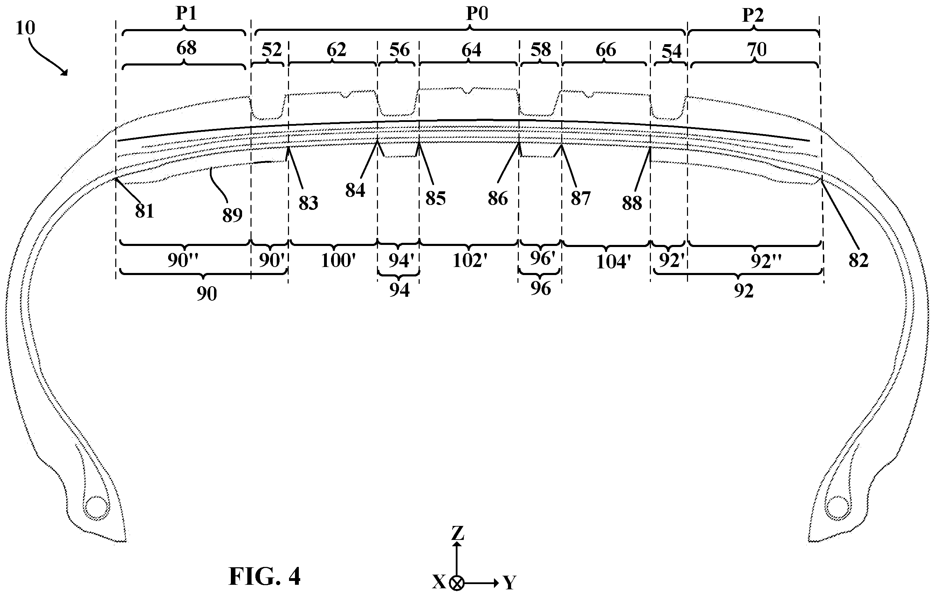

On va maintenant décrire en référence à la figure 4 un pneumatique selon un deuxième mode de réalisation de l'invention. Les éléments analogues à ceux du premier mode de réalisation sont désignés par des références identiques.

A la différence du pneumatique selon le premier mode de réalisation, chaque portion axiale épaisse 90 à 96 est totalement confondue avec respectivement une partie de chaque portion axiale 90' à 96' s'étendant axialement au droit respectivement de chaque découpure circonférentielle principale 52 à 58.

En outre, la couche de produit auto-obturant ne comprend aucune portion axiale mince 100, 102, 104. Ainsi, chaque portion axiale 100', 102', 104' s'étendant axialement au droit respectivement de chaque nervure centrale 62, 64, 66 présente une épaisseur nulle de produit auto-obturant. Chaque portion axiale 100', 102', 104' est agencée axialement entre deux des portions axiales 90' à 96' axialement adjacentes et également axialement entre les deux portions axiales 90" et 92".

Lors du procédé de fabrication du pneumatique 10 selon le deuxième mode de réalisation, on fait varier non plus le pas de pose mais l'épaisseur de la bande 200 qui est sensiblement nulle entre les portions axiales 90' à 96' axialement adjacentes. Ainsi, on enroule la bande 200 en interrompant la bande 200, ici trois fois, entre les deux extrémités axiales 81, 82.

L'invention ne se limite pas aux modes de réalisation décrits précédemment.

En effet, on pourra également envisager un mode de réalisation dans lequel chaque nervure centrale 62, 64, 66 est dépourvue de toute découpure transversale. Dans ce cas, on dirait que chaque nervure centrale 62, 64, 66 est non découpée.

## Revendications

1. Pneumatique (10) comprenant :
- une bande de roulement (14) comprenant :
- au moins une nervure (68, 70), dite profondément découpée, comprenant au moins une découpure transversale (77, 78) présentant une profondeur Ht telle que Ht/Hs ≥ 50%, avec Hs étant la hauteur de sculpture,
- au moins une nervure (62, 64, 66), dite non ou faiblement découpée, dépourvue de découpures transversales ou comprenant des découpures transversales (71, 72, 73) satisfaisant chacune, pour au moins 50%, de préférence pour au moins 75% et plus préférentiellement pour 100% du nombre de découpures transversales (71, 72, 73) de la ou chaque nervure faiblement découpée (62, 64, 66), au moins une des conditions suivantes :
- la découpure transversale (71, 72, 73) de la nervure faiblement découpée (62, 64, 66) présente une largeur strictement inférieure à 1,6 mm,
- la découpure transversale (71, 72, 73) de la nervure faiblement découpée (62, 64, 66) présente une profondeur H telle que H/Hs < 50%,
- une couche interne d'étanchéité (18),
- une couche d'un produit auto-obturant (80) s'étendant circonférentiellement radialement à l'intérieur d'une partie de la couche interne d'étanchéité (18),
**caractérisé en ce que** la couche de produit auto-obturant (80) comprend, sur au moins 50% de la longueur circonférentielle de la couche de produit auto-obturant (80):
- une portion axiale (90", 92") s'étendant axialement au droit de la nervure profondément découpée (68, 70) et présentant une épaisseur moyenne Ec > 0 de produit auto-obturant,
- une portion axiale (100', 102', 104') s'étendant axialement au droit de la nervure non ou faiblement découpée (62, 64, 66) et présentant une épaisseur moyenne Eb ≥ 0 de produit auto-obturant telle que Eb < Ec.

2. Pneumatique (10) selon la revendication précédente, dans lequel chaque nervure profondément découpée (68, 70) et chaque nervure non ou faiblement découpée (62, 64, 66) est axialement délimitée par une extrémité axialement intérieure et par une extrémité axialement extérieure, chaque extrémité axialement intérieure et extérieure étant choisie parmi :
- une extrémité axiale (41, 42) de la bande de roulement (14), et
- une extrémité axialement intérieure ou extérieure (521, 522, 541, 542, 561, 562, 581, 582) d'une découpure circonférentielle (52, 54, 56, 58), dite principale, présentant une profondeur Ha telle que Ha/Hs ≥ 50%, de préférence Ha/Hs ≥ 75% et plus préférentiellement Ha/Hs ≥ 90%,
les extrémités axialement intérieure et extérieure de la nervure (62, 64, 66, 68, 70) étant des extrémités adjacentes l'une à l'autre.

3. Pneumatique (10) selon l'une quelconque des revendications précédentes, dans lequel Ec ≥ 1,10 x Eb, de préférence Ec ≥ 1,30 x Eb et plus préférentiellement Ec ≥ 1,50 x Eb.

4. Pneumatique (10) selon l'une quelconque des revendications précédentes, dans lequel Ec ≤ 5,00 x Eb, de préférence Ec ≤ 4,00 x Eb et plus préférentiellement Ec ≤ 2,50 x Eb.

5. Pneumatique (10) selon l'une quelconque des revendications précédentes, dans lequel la couche de produit auto-obturant (80) comprend au moins une portion axiale, dite épaisse (90, 92), la ou chaque portion axiale épaisse (90, 92) étant au moins en partie confondue avec tout ou partie de la ou de chaque portion axiale (90", 92") s'étendant axialement au droit de la ou de chaque nervure profondément découpée (68, 70), la ou chaque portion axiale épaisse (90, 92) étant axialement délimitée par deux points d'inflexion adjacents (81, 82, 83, 88) de la courbe de surface (89) radialement intérieure de la couche de produit auto-obturant (80), l'épaisseur de ladite portion axiale épaisse (90, 92) augmentant en se déplaçant axialement vers l'intérieur de ladite portion axiale épaisse depuis chacun desdits points d'inflexion, la largeur axiale Wy de la portion axiale épaisse (90, 92) étant telle que Wy/Lcy ≥ 0,50, de préférence Wy/Lcy > 1,00 avec Lcy étant la largeur axiale de ladite nervure profondément découpée (68, 70).

6. Pneumatique (10) selon l'une quelconque des revendications précédentes, dans lequel la ou chaque découpure transversale (77, 78) de la ou chaque nervure profondément découpée (68, 70) présente une largeur supérieure ou égale à 0,7 mm, de préférence supérieure ou égale à 1,0 mm et plus préférentiellement supérieure ou égale à 1,6 mm.

7. Pneumatique (10) selon l'une quelconque des revendications précédentes, dans lequel la ou chaque découpure transversale (77, 78) de la ou chaque nervure profondément découpée (68, 70) présente une profondeur allant de 2,0 mm à la hauteur de sculpture, de préférence allant de 4,0 mm à la hauteur de sculpture et plus préférentiellement allant de 5,0 mm à la hauteur de sculpture.

8. Pneumatique (10) selon l'une quelconque des revendications précédentes, dans lequel chaque extrémité axiale (81, 82) de la couche de produit auto-obturant (80) est agencée à une distance axiale inférieure ou égale à 20%, de préférence inférieure ou égale à 10% de la largeur axiale de la bande de roulement (14) par rapport à respectivement chaque extrémité axiale (41, 42) de la bande de roulement (14), de préférence axialement à l'intérieur de chaque extrémité axiale (41, 42) de la bande de roulement (14).

9. Pneumatique (10) selon l'une quelconque des revendications précédentes dans lequel la bande de roulement (14) comprend :
- une portion axialement centrale (P0) comprenant :
- deux découpures circonférentielles principales (52, 54) les plus axialement extérieures agencées axialement de part et d'autre du plan médian (M) du pneumatique et présentant respectivement une profondeur Ha1, Ha2 telle que Ha1/Hs ≥ 50% et Ha2/Hs ≥ 50%, de préférence Ha1/Hs ≥ 75% et Ha2/Hs ≥ 75% et plus préférentiellement Ha1/Hs ≥ 90% et Ha2/Hs ≥ 90%,
- la ou chaque nervure non ou faiblement découpée (62, 64, 66),
- des première et deuxième portions axialement latérales (P1, P2) agencées axialement à l'extérieur de la portion axialement centrale (P0) de part et d'autre axialement de la portion axialement centrale (P0) par rapport au plan médian (M) du pneumatique (10), chaque première et deuxième portion axialement latérale (P1, P2) s'étendant axialement depuis chaque extrémité axiale (41, 42) de la bande de roulement (14) jusqu'à chaque extrémité axialement extérieure (521, 541) de chaque découpure circonférentielle principale axialement la plus axialement extérieure (52, 54), au moins une des première et deuxième portions axialement latérales (P1, P2) comprenant une nervure profondément découpée (68, 70).

10. Pneumatique (10) selon la revendication précédente, dans lequel chaque première et deuxième portion axialement latérale (P1, P2) comprend respectivement une première et une deuxième nervure profondément découpée (68, 70).

11. Pneumatique (10) selon l'une quelconque des revendications précédentes, dans lequel
la bande de roulement (14) comprend :
- P > 1 nervures profondément découpées (68, 70) comprenant respectivement au moins une découpure transversale (77, 78) présentant une profondeur Ht telle que Ht/Hs ≥ 50%, de préférence Ht/Hs ≥ 75%, plus préférentiellement Ht/Hs ≥ 90% avec Hs étant la hauteur de sculpture, P étant le nombre total de nervures profondément découpées présentes sur le pneumatique,
- Q ≥ 1 nervure(s) non ou faiblement découpée(s) (62, 64, 66) dépourvue(s) de découpures transversales ou comprenant des découpures transversales (71, 72, 73) satisfaisant chacune, pour au moins 50%, de préférence pour au moins 75% et plus préférentiellement pour 100% du nombre de découpures transversales (71, 72, 73) de la ou chaque nervure faiblement découpée (62, 64, 66), au moins une des conditions suivantes :
- la découpure transversale (71, 72, 73) de la nervure non ou faiblement découpée (62, 64, 66) présente une largeur strictement inférieure à 1,6 mm, de préférence strictement inférieure à 1,0 mm et plus préférentiellement strictement inférieure à 0,7 mm,
- la découpure transversale (71, 72, 73) de la nervure non ou faiblement découpée (62, 64, 66) présente une profondeur H telle que H/Hs < 50%, de préférence H/Hs ≤ 30%, Q étant le nombre total de nervure(s) non ou faiblement découpée(s) présente(s) sur le pneumatique,
la couche de produit auto-obturant (80) comprenant :
- P > 1 portions axiales (90", 92") s'étendant chacune axialement au droit d'une des N nervures profondément découpées (68, 70) et présentant chacune une épaisseur moyenne Eck > 0 de produit auto-obturant,
- Q ≥ 1 portion(s) axiale(s) (100', 102', 104') s'étendant chacune axialement au droit de la ou d'une des Q nervure(s) non ou faiblement découpée(s) (62, 64, 66) et présentant chacune une épaisseur moyenne Ebj ≥ 0 de produit auto-obturant, j allant de 1 à Q, et étant agencée axialement entre deux portions axiales adjacentes (90", 92") de la couche de produit auto-obturant (80) s'étendant axialement au droit de deux des P nervures profondément découpées (68, 70), et telle que, pour chaque valeur de k allant de 1 à P, au moins 50% des valeurs de j allant de 1 à Q, de préférence au moins 75% des valeurs de j allant de 1 à Q et plus préférentiellement 100% des valeurs de j allant de 1 à Q, sont telles que Ebj < Eck.

12. Pneumatique (10) selon la revendication précédente, dans lequel la bande de roulement (14) comprend N=Q+1 > 1 découpures circonférentielles principales (52, 54, 56, 58) présentant respectivement une profondeur Hai telle que Hai/Hs ≥ 50%, de préférence Hai/Hs ≥ 75% et plus préférentiellement Hai/Hs ≥ 90% pour i allant de 1 à N, N étant le nombre total de découpures circonférentielles principales présentes sur le pneumatique, la ou chaque nervure non ou faiblement découpée (62, 64, 66) étant agencée axialement entre deux découpures circonférentielles principales adjacentes (52, 54, 56, 58) et délimitée axialement par lesdites deux découpures circonférentielles principales adjacentes (52, 54, 56, 58),
la couche de produit auto-obturant (80) comprenant N > 1 portions axiales (90', 92', 94', 96') s'étendant chacune axialement au droit d'une des N découpures circonférentielles principales (52, 54, 56, 58) et présentant chacune une épaisseur moyenne Eai >0 de produit auto-obturant, telle que, pour chaque valeur de i allant de 1 à N, au moins 50% des valeurs de j allant de 1 à Q, de préférence au moins 75% des valeurs de j allant de 1 à Q et plus préférentiellement 100% des valeurs de j allant de 1 à Q sont telles que Ebj < Eai.

13. Pneumatique (10) selon la revendication précédente, dans lequel la ou chaque découpure circonférentielle principale (52, 54, 56, 58) présente une largeur axiale supérieure ou égale à 1,0 mm, de préférence supérieure ou égale à 5,0 mm et plus préférentiellement supérieure ou égale à 8,0 mm et encore plus préférentiellement allant de 8,0 mm à 20,0 mm.

14. Pneumatique (10) selon la revendication 12 ou 13, dans lequel la ou chaque découpure circonférentielle principale (52, 54, 56, 58) présente une profondeur allant de 4,0 mm à la hauteur de sculpture, de préférence allant de 5,0 mm à la hauteur de sculpture et plus préférentiellement allant de 5,5 mm à la hauteur de sculpture

15. Pneumatique (10) selon l'une quelconque des revendications 12 à 14, dans lequel la couche de produit auto-obturant (80) comprend au moins une portion axiale (90, 92, 94, 96), dite épaisse, la ou chaque portion axiale épaisse (90, 92, 94, 96) étant au moins en partie confondue avec tout ou partie de la ou de chaque portion axiale (90', 92', 94', 96') s'étendant axialement au droit de la ou de chaque découpure circonférentielle principale (52, 54, 56, 58), la ou chaque portion axiale épaisse (90, 92, 94, 96) étant axialement délimitée par deux points d'inflexion adjacents (81, 82, 83, 84, 85, 86, 87, 88) de la courbe de surface radialement intérieure (89) de la couche de produit auto-obturant (80), l'épaisseur de ladite portion axiale épaisse (90, 92, 94, 96) augmentant en se déplaçant axialement vers l'intérieur de ladite portion axiale épaisse (90, 92, 94, 96) depuis chacun desdits points d'inflexion, la largeur axiale Wx de la portion axiale épaisse (90, 92, 94, 96) étant telle que Wx/Lcx ≥ 0,50, de préférence Wx/Lcx > 1,00 avec Lcx étant la largeur axiale de ladite découpure circonférentielle principale (52, 54, 56, 58).

## Patentansprüche

1. Reifen (10), welcher umfasst:
- einen Laufstreifen (14), welcher umfasst:
- mindestens eine Rippe (68, 70), tief ausgeschnittene Rippe genannt, die mindestens einen quer verlaufenden Ausschnitt (77, 78) umfasst, der eine solche Tiefe Ht aufweist, dass Ht/Hs ≥ 50 % ist, wobei Hs die Profiltiefe ist,
- mindestens eine Rippe (62, 64, 66), nicht oder wenig ausgeschnittene Rippe genannt, die nicht mit quer verlaufenden Ausschnitten versehen ist oder quer verlaufende Ausschnitte (71, 72, 73) umfasst, die jeweils, für mindestens 50 %, vorzugsweise für mindestens 75 % und stärker bevorzugt für 100 % der Anzahl quer verlaufender Ausschnitte (71, 72, 73) der oder jeder wenig ausgeschnittenen Rippe (62, 64, 66), mindestens eine der folgenden Bedingungen erfüllen:
- Der quer verlaufende Ausschnitt (71, 72, 73) der wenig ausgeschnittenen Rippe (62, 64, 66) weist eine Breite auf, die streng kleiner als 1,6 mm ist,
- der quer verlaufende Ausschnitt (71, 72, 73) der wenig ausgeschnittenen Rippe (62, 64, 66) weist eine solche Tiefe H auf, dass H/Hs < 50 % ist,
- eine innere Dichtungsschicht (18),
- eine Schicht eines selbstdichtenden Produkts (80), die sich radial innerhalb eines Teils der inneren Dichtungsschicht (18) in Umfangsrichtung erstreckt, **dadurch gekennzeichnet, dass** die Schicht aus selbstdichtendem Produkt (80) auf mindestens 50 % der Umfangslänge der Schicht aus selbstdichtendem Produkt (80) umfasst:
- einen axialen Abschnitt (90", 92"), der sich an der tief ausgeschnittenen Rippe (68, 70) axial erstreckt und eine mittlere Dicke Ec > 0 des selbstdichtenden Produkts aufweist,
- einen axialen Abschnitt (100', 102', 104'), der sich an der nicht oder wenig ausgeschnittenen Rippe (62, 64, 66) axial erstreckt und eine solche mittlere Dicke Eb ≥ 0 des selbstdichtenden Produkts aufweist, dass Eb < Ec ist.

2. Reifen (10) nach dem vorhergehenden Anspruch, wobei jede tief ausgeschnittene Rippe (68, 70) und jede nicht oder wenig ausgeschnittene Rippe (62, 64, 66) axial von einem axial inneren Ende und von einem axial äußeren Ende begrenzt wird, wobei jedes axial innere und äußere ausgewählt ist aus:
- einem axialen Ende (41, 42) des Laufstreifens (14) und
- einem axial inneren oder äußeren Ende (521, 522, 541, 542, 561, 562, 581, 582) eines umlaufenden Ausschnitts (52, 54, 56, 58), umlaufender Hauptausschnitt genannt, der eine solche Tiefe Ha aufweist, dass Ha/Hs ≥ 50 %, vorzugsweise Ha/Hs ≥ 75 % und stärker bevorzugt Ha/Hs ≥ 90 %ist,
wobei das axial innere und äußere Ende der Rippe (62, 64, 66, 68, 70) einander benachbarte Enden sind.

3. Reifen (10) nach einem der vorhergehenden Ansprüche, wobei Ec ≥ 1,10 x Eb, vorzugsweise Ec ≥ 1,30 x Eb und stärker bevorzugt Ec ≥ 1,50 x Eb ist.

4. Reifen (10) nach einem der vorhergehenden Ansprüche, wobei Ec ≤ 5,00 x Eb, vorzugsweise Ec ≤ 4,00 x Eb und stärker bevorzugt Ec ≤ 2,50 x Eb ist.

5. Reifen (10) nach einem der vorhergehenden Ansprüche, wobei die Schicht aus selbstdichtendem Produkt (80) mindestens einen axialen Abschnitt umfasst, dicker axialer Abschnitt (90, 92) genannt, wobei der oder jeder dicke axiale Abschnitt (90, 92) wenigstens teilweise mit dem gesamten oder einem Teil des oder jedes axialen Abschnitts (90", 92") zusammenfällt, der sich axial an der oder jeder tief ausgeschnittenen Rippe (68, 70) erstreckt, wobei der oder jeder dicke axiale Abschnitt (90, 92) axial von zwei benachbarten Wendepunkten (81, 82, 83, 88) der radial inneren Oberflächenkurve (89) der Schicht aus selbstdichtendem Produkt (80) begrenzt wird, wobei die Dicke des dicken axialen Abschnitts (90, 92) von jedem der Wendepunkt aus, wenn man sich axial zum Inneren des dicken axialen Abschnitts hin bewegt, zunimmt, wobei die axiale Breite Wy des dicken axialen Abschnitts (90, 92) so beschaffen ist, dass Wy/Lcy ≥ 0,50, vorzugsweise Wy/Lcy > 1,00 ist, wobei Lcy die axiale Breite der tief ausgeschnittenen Rippe (68, 70) ist.

6. Reifen (10) nach einem der vorhergehenden Ansprüche, wobei der oder jeder quer verlaufende Ausschnitt (77, 78) der oder jeder tief ausgeschnittenen Rippe (68, 70) eine Breite aufweist, die größer oder gleich 0,7 mm, vorzugsweise größer oder gleich 1,0 mm und stärker bevorzugt größer oder gleich 1,6 mm ist.

7. Reifen (10) nach einem der vorhergehenden Ansprüche, wobei der oder jeder quer verlaufende Ausschnitt (77, 78) der oder jeder tief ausgeschnittenen Rippe (68, 70) eine Tiefe aufweist, die zwischen 2,0 mm und der Profiltiefe, vorzugsweise zwischen 4,0 mm und der Profiltiefe und stärker bevorzugt zwischen 5,0 mm und der Profiltiefe liegt.

8. Reifen (10) nach einem der vorhergehenden Ansprüche, wobei jedes axiale Ende (81, 82) der Schicht aus selbstdichtendem Produkt (80) in einem axialen Abstand, der kleiner oder gleich 20 %, vorzugsweise kleiner oder gleich 10 % der axialen Breite des Laufstreifens (14) ist, in Bezug auf das jeweilige axiale Ende (41, 42) des Laufstreifens (14) angeordnet ist, vorzugsweise axial innerhalb des jeweiligen axialen Endes (41, 42) des Laufstreifens (14).

9. Reifen (10) nach einem der vorhergehenden Ansprüche, wobei der Laufstreifen (14) umfasst:
- einen axial mittleren Abschnitt (P0), welcher umfasst:
- zwei umlaufende Hauptausschnitte (52, 54), welche die axial äußersten sind, axial beiderseits der Mittelebene (M) des Reifens angeordnet sind und eine solche Tiefe Ha1 bzw. Ha2 aufweisen, dass Ha1/Hs ≥ 50 % und Ha2/Hs ≥50 %, vorzugsweise Ha1/Hs ≥ 75 % und Ha2/Hs ≥ 75 % und stärker bevorzugt Ha1/Hs ≥ 90 % und Ha2/Hs ≥ 90 % ist,
- die oder jede nicht oder wenig ausgeschnittene Rippe (62, 64, 66),
- einen ersten und einen zweiten axial seitlichen Abschnitt (P1, P2), die axial außerhalb des axial mittleren Abschnitts (P0) axial beiderseits des axial mittleren Abschnitts (P0) in Bezug auf die Mittelebene (M) des Reifens (10) angeordnet sind, wobei der erste und zweite axial seitliche Abschnitt (P1, P2) sich jeweils axial vom jeweiligen axialen Ende (41, 42) des Laufstreifens (14) aus bis zum jeweiligen axial äußeren Ende (521, 541) des jeweiligen axial äußersten umlaufenden Hauptausschnitts (52, 54) erstrecken, wobei der erste und/oder der zweite axial seitliche Abschnitt (P1, P2) eine tief ausgeschnittene Rippe (68, 70) umfassen.

10. Reifen (10) nach dem vorhergehenden Anspruch, wobei der erste und der zweite axial seitliche Abschnitt (P1, P2) eine erste bzw. eine zweite tief ausgeschnittene Rippe (68, 70) umfassen.

11. Reifen (10) nach einem der vorhergehenden Ansprüche, wobei
der Laufstreifen (14) umfasst:
- P > 1 tief ausgeschnittene Rippen (68, 70), die jeweils mindestens einen quer verlaufenden Ausschnitt (77, 78) umfassen, der eine solche Tiefe Ht aufweist, dass Ht/Hs ≥ 50 %, vorzugsweise Ht/Hs ≥ 75 %, stärker bevorzugt Ht/Hs ≥ 90 % ist, wobei Hs die Profiltiefe ist und P die Gesamtzahl tief ausgeschnittener Rippen ist, die auf dem Reifen vorhanden sind,
- Q ≥ 1 nicht oder wenig ausgeschnittene Rippe(n) (62, 64, 66), die nicht mit quer verlaufenden Ausschnitten versehen ist (sind) oder quer verlaufende Ausschnitte (71, 72, 73) umfasst (umfassen), die jeweils, für mindestens 50 %, vorzugsweise für mindestens 75 % und stärker bevorzugt für 100 % der Anzahl quer verlaufender Ausschnitte (71, 72, 73) der oder jeder wenig ausgeschnittenen Rippe (62, 64, 66), mindestens eine der folgenden Bedingungen erfüllen:
- Der quer verlaufende Ausschnitt (71, 72, 73) der nicht oder wenig ausgeschnittenen Rippe (62, 64, 66) weist eine Breite auf, die streng kleiner als 1,6 mm, vorzugsweise streng kleiner als 1,0 mm und stärker bevorzugt streng kleiner als 0,7 mm ist,
- der quer verlaufende Ausschnitt (71, 72, 73) der nicht oder wenig ausgeschnittenen Rippe (62, 64, 66) weist eine solche Tiefe H auf, dass H/Hs < 50 %, vorzugsweise H/Hs < 30 % ist,
wobei Q die Gesamtzahl nicht oder wenig ausgeschnittener Rippen ist, die auf dem Reifen vorhanden sind,
wobei die Schicht aus selbstdichtendem Produkt (80) umfasst:
- P > 1 axiale Abschnitte (90", 92"), die sich jeweils axial an einer der N tief ausgeschnittenen Rippen (68, 70) erstrecken und jeweils eine mittlere Dicke Eck > 0 des selbstdichtenden Produkts aufweisen,
- Q ≥ 1 axiale(n) Abschnitt(e) (100', 102', 104'), die sich jeweils axial an der oder einer der Q nicht oder wenig ausgeschnittene(n) Rippe(n) (62, 64, 66) erstrecken und jeweils eine mittlere Dicke Ebj ≥ 0 des selbstdichtenden Produkts aufweisen, für j von 1 bis Q, und axial zwischen zwei benachbarten axialen Abschnitten (90", 92") der Schicht aus selbstdichtendem Produkt (80) angeordnet sind, die sich axial an zwei der P tief ausgeschnittenen Rippen (68, 70) erstrecken, und derart, dass für jeden Wert von k von 1 bis P für mindestens 50 % der Werte von j von 1 bis Q, vorzugsweise mindestens 75 % der Werte von j von 1 bis Q und stärker bevorzugt 100 % der Werte von j von 1 bis Q gilt, dass Ebj < Eck ist.

12. Reifen (10) nach dem vorhergehenden Anspruch, wobei der Laufstreifen (14) N=Q+1 > 1 umlaufende Hauptausschnitte (52, 54, 56, 58) umfasst, die jeweils eine solche Tiefe Hai aufweisen, dass Hai/Hs ≥ 50 %, vorzugsweise Hai/Hs ≥ 75 % und stärker bevorzugt Hai/Hs ≥ 90 % ist, für i von 1 bis N, wobei N die Gesamtzahl umlaufender Hauptausschnitte ist, die auf dem Reifen vorhanden sind, wobei die oder jede nicht oder wenig ausgeschnittene Rippe (62, 64, 66) axial zwischen zwei benachbarten umlaufenden Hauptausschnitten (52, 54, 56, 58) angeordnet ist und axial von diesen zwei benachbarten umlaufenden Hauptausschnitten (52, 54, 56, 58) begrenzt wird,
wobei die Schicht aus selbstdichtendem Produkt (80) N > 1 axiale Abschnitte (90', 92', 94', 96') umfasst, die sich jeweils axial an einem der N umlaufenden Hauptausschnitte (52, 54, 56, 58) erstrecken und jeweils eine solche mittlere Dicke Eai > 0 von selbstdichtendem Produkt aufweisen, dass für jeden Wert von i von 1 bis N für mindestens 50 % der Werte von j von 1 bis Q, vorzugsweise mindestens 75 % der Werte von j von 1 bis Q und stärker bevorzugt 100 % der Werte von j von 1 bis Q gilt, dass Ebj < Eai ist.

13. Reifen (10) nach dem vorhergehenden Anspruch, wobei der oder jeder umlaufende Hauptausschnitt (52, 54, 56, 58) eine axiale Breite aufweist, die größer oder gleich 1,0 mm, vorzugsweise größer oder gleich 5,0 mm und stärker bevorzugt größer oder gleich 8,0 mm ist und noch stärker bevorzugt 8,0 bis 20,0 mm beträgt.

14. Reifen (10) nach Anspruch 12 oder 13, wobei der oder jeder umlaufende Hauptausschnitt (52, 54, 56, 58) eine Tiefe aufweist, die zwischen 4,0 mm und der Profiltiefe, vorzugsweise zwischen 5,0 mm und der Profiltiefe und stärker bevorzugt zwischen 5,5 mm und der Profiltiefe liegt.

15. Reifen (10) nach einem der Ansprüche 12 bis 14, wobei die Schicht aus selbstdichtendem Produkt (80) mindestens einen axialen Abschnitt (90, 92, 94, 96) umfasst, dicker axialer Abschnitt genannt, wobei der oder jeder dicke axiale Abschnitt (90, 92, 94, 96) wenigstens teilweise mit dem gesamten oder einem Teil des oder jedes axialen Abschnitts (90', 92', 94', 96') zusammenfällt, der sich axial an dem oder jedem umlaufenden Hauptausschnitt (52, 54, 56, 58) erstreckt, wobei der oder jeder dicke axiale Abschnitt (90, 92, 94, 96) von zwei benachbarten Wendepunkten (81, 82, 83, 84, 85, 86, 87, 88) der radial inneren Oberflächenkurve (89) der Schicht aus selbstdichtendem Produkt (80) begrenzt wird, wobei die Dicke des dicken axialen Abschnitts (90, 92, 94, 96) von jedem der Wendepunkt aus, wenn man sich axial zum Inneren des dicken axialen Abschnitts (90, 92, 94, 96) hin bewegt, zunimmt, wobei die axiale Breite Wx des dicken axialen Abschnitts (90, 92, 94, 96) so beschaffen ist, dass Wx/Lcx ≥ 0,50, vorzugsweise Wx/Lcx > 1,00 ist, wobei Lcx die axiale Breite des umlaufenden Hauptausschnitts (52, 54, 56, 58) ist.

## Claims

1. Tyre (10) comprising:
- a tread (14) comprising:
- at least one rib (68, 70), referred to as deeply cut rib, comprising at least one transverse cut (77, 78) having a depth Ht such that Ht/Hs ≥ 50%, where Hs is the tread pattern height,
- at least one rib (62, 64, 66), referred to as non-cut or slightly cut rib, which lacks transverse cuts or comprises transverse cuts (71, 72, 73), each satisfying, for at least 50%, preferably for at least 75% and more preferably for 100% of the number of transverse cuts (71, 72, 73) of the or each slightly cut rib (62, 64, 66), at least one of the following conditions:
- the transverse cut (71, 72, 73) of the slightly cut rib (62, 64, 66) has a width strictly less than 1.6 mm,
- the transverse cut (71, 72, 73) of the slightly cut rib (62, 64, 66) has a depth H such that H/Hs < 50%,
- an airtight internal layer (18),
- a layer of a self-sealing product (80) extending circumferentially radially on the inside of part of the airtight internal layer (18),
**characterized in that,** over at least 50% of the circumferential length of the layer of self-sealing product (80), the layer of self-sealing product (80) comprises:
- an axial portion (90", 92") extending axially in line with the deeply cut rib (68, 70) and having an average thickness Ec > 0 of self-sealing product,
- an axial portion (100', 102', 104') extending axially in line with the non-cut or slightly cut rib (62, 64, 66) and having an average thickness Eb ≥ 0 of self-sealing product such that Eb < Ec.

2. Tyre (10) according to the preceding claim, wherein each deeply cut rib (68, 70) and each non-cut or slightly cut rib (62, 64, 66) is axially delimited by an axially inner end and by an axially outer end, each axially inner and outer end being chosen from:
- an axial end (41, 42) of the tread (14), and
- an axially inner or outer end (521, 522, 541, 542, 561, 562, 581, 582) of a circumferential cut (52, 54, 56, 58), referred to as main circumferential cut, having a depth Ha such that Ha/Hs ≥ 50%, preferably Ha/Hs ≥ 75% and more preferably Ha/Hs ≥ 90%,
the axially inner and outer ends of the rib (62, 64, 66, 68, 70) being ends that are adjacent to one another.

3. Tyre (10) according to either one of the preceding claims, wherein Ec ≥ 1.10 x Eb, preferably Ec ≥ 1.30 x Eb and more preferably Ec ≥ 1.50 x Eb.

4. Tyre (10) according to any one of the preceding claims, wherein Ec ≤ 5.00 x Eb, preferably Ec ≤ 4.00 x Eb and more preferably Ec ≤ 2.50 x Eb.

5. Tyre (10) according to any one of the preceding claims, wherein the layer of self-sealing product (80) comprises at least one axial portion, referred to as thick axial portion (90, 92), the or each thick axial portion (90, 92) at least partially coinciding with all or part of the or each axial portion (90", 92") extending axially in line with the or each deeply cut rib (68, 70), the or each thick axial portion (90, 92) being axially delimited by two adjacent inflection points (81, 82, 83, 88) on the radially inner surface curve (89) of the layer of self-sealing product (80), the thickness of the said thick axial portion (90, 92) increasing in the direction axially towards the inside of the said thick axial portion from each of the said inflection points, the axial width Wy of the thick axial portion (90, 92) being such that Wy/Lcy ≥ 0.50, preferably Wy/Lcy > 1.00, where Lcy is the axial width of the said deeply cut rib (68, 70).

6. Tyre (10) according to any one of the preceding claims, wherein the or each transverse cut (77, 78) of the or each deeply cut rib (68, 70) has a width greater than or equal to 0.7 mm, preferably greater than or equal to 1.0 mm and more preferably greater than or equal to 1.6 mm.

7. Tyre (10) according to any one of the preceding claims, wherein the or each transverse cut (77, 78) of the or each deeply cut rib (68, 70) has a depth ranging from 2.0 mm to the tread pattern height, preferably ranging from 4.0 mm to the tread pattern height and more preferably ranging from 5.0 mm to the tread pattern height.

8. Tyre (10) according to any one of the preceding claims, wherein each axial end (81, 82) of the layer of self-sealing product (80) is arranged at an axial distance less than or equal to 20%, preferably less than or equal to 10% of the axial width of the tread (14) in relation to each axial end (41, 42), respectively, of the tread (14), preferably axially on the inside of each axial end (41, 42) of the tread (14).

9. Tyre (10) according to any one of the preceding claims, wherein the tread (14) comprises:
- an axially central portion (P0) comprising:
- two axially outermost main circumferential cuts (52, 54) arranged axially one on each side of the median plane (M) of the tyre and having a depth Ha1, Ha2, respectively, such that Ha1/Hs ≥ 50% and Ha2/Hs ≥ 50%, preferably Ha1/Hs ≥ 75% and Ha2/Hs ≥ 75% and more preferably Ha1/Hs ≥ 90% and Ha2/Hs ≥ 90%,
- the or each non-cut or slightly cut rib (62, 64, 66),
- first and second axially lateral portions (P1, P2) arranged axially on the outside of the axially central portion (P0) axially one on each side of the axially central portion (P0) in relation to the median plane (M) of the tyre (10), each first and second axially lateral portion (P1, P2) extending axially from each axial end (41, 42) of the tread (14) to each axially outer end (521, 541) of each axially outermost main circumferential cut (52, 54), at least one of the first and second axially lateral portions (P1, P2) comprising a deeply cut rib (68, 70).

10. Tyre (10) according to the preceding claim, wherein each first and second axially lateral portion (P1, P2) comprises a first and a second deeply cut rib (68, 70), respectively.

11. Tyre (10) according to any one of the preceding claims, wherein
the tread (14) comprises:
- P > 1 deeply cut ribs (68, 70) comprising at least one transverse cut (77, 78), respectively, having a depth Ht such that Ht/Hs ≥ 50%, preferably Ht/Hs ≥ 75%, more preferably Ht/Hs ≥ 90%, where Hs is the tread pattern height and P is the total number of deeply cut ribs present on the tyre,
- Q ≥ 1 non-cut or slightly cut rib(s) (62, 64, 66) which lack(s) transverse cuts or comprise(s) transverse cuts (71, 72, 73), each satisfying, for at least 50%, preferably for at least 75% and more preferably for 100% of the number of transverse cuts (71, 72, 73) of the or each slightly cut rib (62, 64, 66), at least one of the following conditions:
- the transverse cut (71, 72, 73) of the non-cut or slightly cut rib (62, 64, 66) has a width strictly less than 1.6 mm, preferably strictly less than 1.0 mm and more preferably strictly less than 0.7 mm,
- the transverse cut (71, 72, 73) of the non-cut or slightly cut rib (62, 64, 66) has a depth H such that H/Hs < 50%, preferably H/Hs ≤ 30%,
Q being the total number of non-cut or slightly cut rib(s) present on the tyre,
the layer of self-sealing product (80) comprising:
- P > 1 axial portions (90", 92") each extending axially in line with one of the N deeply cut ribs (68, 70) and each having an average thickness Eck > 0 of self-sealing product,
- Q ≥ 1 axial portion(s) (100', 102', 104') each extending axially in line with the or one of the Q non-cut or slightly cut rib(s) (62, 64, 66) and each having an average thickness Ebj ≥ 0 of self-sealing product, with j ranging from 1 to Q, and being arranged axially between two adjacent axial portions (90", 92") of the layer of self-sealing product (80) extending axially in line with two of the P deeply cut ribs (68, 70), and such that, for each value of k ranging from 1 to P, at least 50% of the values of j ranging from 1 to Q, preferably at least 75% of the values of j ranging from 1 to Q and more preferably 100% of the values of j ranging from 1 to Q are such that Ebj < Eck.

12. Tyre (10) according to the preceding claim, wherein the tread (14) comprises N=Q+1 > 1 main circumferential cuts (52, 54, 56, 58) respectively having a depth Hai such that Hai/Hs ≥ 50%, preferably Hai/Hs ≥ 75% and more preferably Hai/Hs ≥ 90% for i ranging from 1 to N, N being the total number of main circumferential cuts present on the tyre, the or each non-cut or slightly cut rib (62, 64, 66) being arranged axially between two adjacent main circumferential cuts (52, 54, 56, 58) and being delimited axially by the said two adjacent main circumferential cuts (52, 54, 56, 58),
the layer of self-sealing product (80) comprising N > 1 axial portions (90', 92', 94', 96') each extending axially in line with one of the N main circumferential cuts (52, 54, 56, 58) and each having an average thickness Eai > 0 of self-sealing product, such that, for each value of i ranging from 1 to N, at least 50% of the values of j ranging from 1 to Q, preferably at least 75% of the values of j ranging from 1 to Q and more preferably 100% of the values of j ranging from 1 to Q are such that Ebj < Eai.

13. Tyre (10) according to the preceding claim, wherein the or each main circumferential cut (52, 54, 56, 58) has an axial width greater than or equal to 1.0 mm, preferably greater than or equal to 5.0 mm and more preferably greater than or equal to 8.0 mm and, more preferably still, ranging from 8.0 mm to 20.0 mm.

14. Tyre (10) according to Claim 12 or 13, wherein the or each main circumferential cut (52, 54, 56, 58) has a depth ranging from 4.0 mm to the tread pattern height, preferably ranging from 5.0 mm to the tread pattern height and more preferably ranging from 5.5 mm to the tread pattern height.

15. Tyre (10) according to any one of Claims 12 to 14, wherein the layer of self-sealing product (80) comprises at least one axial portion (90, 92, 94, 96), referred to as thick axial portion, the or each thick axial portion (90, 92, 94, 96) at least partially coinciding with all or part of the or each axial portion (90', 92', 94', 96') extending axially in line with the or each main circumferential cut (52, 54, 56, 58), the or each thick axial portion (90, 92, 94, 96) being axially delimited by two adjacent inflection points (81, 82, 83, 84, 85, 86, 87, 88) on the radially inner surface curve (89) of the layer of self-sealing product (80), the thickness of the said thick axial portion (90, 92, 94, 96) increasing in the direction axially towards the inside of the said thick axial portion (90, 92, 94, 96) from each of the said inflection points, the axial width Wx of the thick axial portion (90, 92, 94, 96) being such that Wx/Lcx ≥ 0.50, preferably Wx/Lcx > 1.00, where Lcx is the axial width of the said main circumferential cut (52, 54, 56, 58).
